# EUROPÄISCHE PATENTSCHRIFT

(11) **EP 2 627 611 B1**
(45) Veröffentlichungstag und Bekanntmachung des Hinweises auf die Patenterteilung: **31.03.2021**
(21) Anmeldenummer: 11772868.3
(22) Anmeldetag: 13.10.2011
(51) Int. Cl.: C03B 5/185, C03B 5/225, C03B 5/235

(54) **ENERGETISCH EFFIZIENTE HOCHTEMPERATURLÄUTERUNG**
ENERGY-EFFICIENT HIGH-TEMPERATURE REFINING
AFFINAGE À TEMPÉRATURE ÉLEVÉE EFFICACE AU PLAN ÉNERGÉTIQUE

(30) Priorität: 14.10.2010 DE 102010048297
(43) Veröffentlichungstag der Anmeldung: 21.08.2013
(73) Patentinhaber: Schott AG, 55122 Mainz (DE)
(72) Erfinder: OHMSTEDE, Volker, 55411 Bingen (DE); MÜNCH, Wolfgang, 55270 Budenheim (DE); BAUER, Stefan, 55595 Hüffelsheim (DE); HUNNIUS, Holger, 55122 Mainz (DE); WEIDMANN, Günter, 55237 Flonheim (DE)
(74) Vertreter: Blumbach · Zinngrebe Patentanwälte PartG mbB
(86) Internationale Anmeldenummer: PCT/EP2011/004751
(87) Internationale Veröffentlichungsnummer: WO 2012/048790

(56) Entgegenhaltungen:
- DE-A1- 10 253 222
- DE-A1-102006 003 521
- DE-A1-102006 051 049

## Beschreibung

Die vorliegende Erfindung betrifft ein Verfahren und eine Vorrichtung zum Läutern einer Glasschmelze.

### Hintergrund der Erfindung

An die Qualität optischer und/oder technischer Gläser und/oder Glaskeramiken werden heutzutage hohe Anforderungen gestellt. Zum einen sollen diese möglichst homogen, frei von Blasen und Schlieren sein. Zum anderen sollen die Gläser sogenannte "grüne Gläser" sein, welche soweit als möglich keine toxischen oder ökologisch bedenklichen Substanzen, wie zum Beispiel Arsen oder Antimon, enthalten sollen.

Die Qualität des fertigen Glases und/oder der fertigen Glaskeramik wird hierbei wesentlich durch die Qualität der Läuterung der Glasschmelze beeinflusst. Ein Ansatz, die Qualität der Läuterung zu verbessern, basiert auf der Verwendung hoher Läutertemperaturen. Denn eine Erhöhung der Läutertemperatur resultiert in eine Verringerung der Schmelzviskosität und damit in eine Erhöhung der Aufstiegsgeschwindigkeit der Blasen in der Schmelze, so dass vorhandene oder entstandene Blasen besser aus der Schmelze entfernbar sind.

Bei erhöhten Läutertemperaturen, insbesondere von größer als 1700°C, sind auch sogenannte Hochtemperaturläutermittel zugänglich. Ein Beispiel für ein Hochtemperaturläutermittel stellt Sn0₂ dar. Sn0₂ ist ökologisch unbedenklich, kann aber erst ab einer Läutertemperatur oberhalb von 1500°C zum Einsatz kommen. Dadurch kann auf ökologisch bedenkliche Läutermittel, wie zum Beispiel As₂O₅, die bereits bei einer Temperatur oberhalb von 1250°C einsetzbar sind, verzichtet werden.

Eine Läuterung in einem Hochtemperaturbereich, insbesondere von größer als 1700°C, ist zum Beispiel in der Druckschrift DE 10 2006 003 521 A1 beschrieben. Die Schmelze wird durch Elektroden beheizt, die in der Schmelze positioniert sind. Die dort beschriebene Lehre zielt jedoch nicht nur auf eine bloße Temperaturerhöhung ab. Wesentlich ist dort auch das Ausbilden einer stabilen Konvektionswalze im Läutergefäß. Diese wird erzielt, indem eine große Temperaturdifferenz in der Schmelze erzeugt wird. Die Temperaturdifferenz herrscht zwischen einem inneren Volumenbereich der Schmelze und einem Randbereich der Schmelze. Dazu werden die Seitenwände des Läutertiegels gekühlt. Diese werden derart gekühlt, dass die Schmelze auf den gekühlten Seitenwänden erstarrt. Es bildet sich eine Schutzschicht aus arteigenem Material aus. Es wird ein sogenannter "Skull-Tiegel" gebildet. Der Grundgedanke der dort beschriebenen Lehre basiert auf der Annahme, dass es zum Ausbilden einer Konvektionswalze erforderlich sei, die Schmelze in den Randbereichen mittels der gekühlten Seitenwände zu kühlen und gleichzeitig die Schmelze im Inneren des Läutergefäßes mittels der Elektroden zu beheizen. Die dort gezeigte Vorrichtung ist geeignet zur Herstellung von "grünen Glaser". Aufgrund der Kühlung fallen jedoch sehr hohe Energiekosten an. Die in die Schmelze eingetragene Energie zum Erwärmen der Schmelze wird der Schmelze durch die gekühlten Seitenwände "direkt" wieder entzogen. Zudem müssen die Stromquellen entsprechend dimensioniert sein, um die erforderliche elektrische Leistung bereitstellen zu können. Ferner muss eine ausreichende Kühlung für die Seitenwand bereitgestellt werden. Da die dort gekühlten Seitenwände auf mit Wasser durchflossenen Kupferrohren basieren, darf die Kühlung unter keinen Umständen ausfallen, da dies den Kollaps der gesamten Anlage zur Folge hätte. Daher müssen entsprechend Notkühlungen vorgesehen sein, die einen zusätzlichen Aufwand erfordern.

Eine weitere Vorrichtung zum Läutern von schmelzflüssigem Glas ist in der Druckschrift DE 102 53 222 A1 beschrieben. Die Vorrichtung ist hinter der Schmelzwanne angeordnet und wird in einem Temperaturbereich zwischen 1300 °C und 1700 °C betrieben.

### Allgemeine Beschreibung der Erfindung

Vor dem vorstehend geschilderten Hintergrund liegt der vorliegenden Erfindung die Aufgabe zugrunde, ein Verfahren und eine Vorrichtung zur Herstellung von Glas und/oder Glaskeramiken und/oder zur Läuterung einer Glasschmelze bereitzustellen, welche die Nachteile des Standes der Technik zumindest vermindern.

Insbesondere soll der finanzielle Aufwand zum Aufbau und zum Betrieb einer Anlage zur Läuterung reduziert werden. Vorzugsweise soll hierbei der Energiebedarf zur Läuterung reduziert werden. Die gute, mit der vorstehend beschriebenen Anlage erzielte Qualität der Gläser soll jedoch wenigstens erreicht werden.

Zudem soll die Herstellung "grüner Gläser" möglich sein.

Gelöst werden diese Aufgaben bereits durch die Vorrichtung und das Verfahren gemäß den unabhängigen Patentansprüchen. Vorteilhafte Ausführungsformen des erfindungsgemäßen Verfahrens und der erfindungsgemäßen Vorrichtung sind Gegenstand der jeweiligen Unteransprüche.

Allgemein sieht die Erfindung vor, die im Stand der Technik beschriebenen Skullwände durch "heiße" temperaturstabile Metallwände, wie zum Beispiel Ir-Wände, zu ersetzen, so dass keine externe aktive Kühlung erforderlich ist und die nun nicht mehr mit erstarrter Schmelze bedeckten Seitenwände konduktiv und gegebenenfalls zusätzlich induktiv, vorzugsweise lokal, zu beheizen, so dass die Schmelze indirekt über die Seitenwände beheizt wird.

Zunächst sieht die Erfindung eine Vorrichtung zum Läutern einer anorganischen nichtmetallischen Schmelze vor. Die Vorrichtung ist vorzugsweise geeignet zum kontinuierlichen Läutern. Die Schmelze ist vorzugsweise eine Glasschmelze zur Herstellung eines Glases und/oder einer Glaskeramik.

Die Vorrichtung umfasst die folgenden Bestandteile:
- einen Läutertiegel mit einer Oberseite und einer Unterseite, der zumindest durch Seitenwände, die an einer Innenseite eine metallische Auskleidung als Schmelzkontaktfläche aufweisen, gebildet ist, wobei die Seitenwände zumindest eine, vorzugsweise an die Auskleidung grenzende, erste Lage und eine zweite Lage aufweisen, wobei die erste Lage eine gegenüber der zweiten Lage erhöhte Temperaturstabilität besitzt und die zweite Lage eine gegenüber der ersten Lage geringere Wärmeleitfähigkeit besitzt, und wobei die Auskleidung vollständig die Schmelzkontaktfläche des Läutertiegels bereitstellt,
- wenigstens eine Heizeinrichtung zum konduktiven Beheizen der Auskleidung durch einen Stromfluss in der Auskleidung, so dass die Schmelze mittels der beheizten Auskleidung beheizbar ist, wobei die Heizeinrichtung und die Auskleidung über Zuleitungen miteinander verbunden sind, wobei
- die Zuleitungen die Auskleidung über zumindest einen oberen Anschluss und zumindest einen unteren Anschluss derart kontaktieren, dass wenigstens in der Auskleidung der Seitenwand zumindest abschnittsweise ein Stromfluss erzeugbar ist, welcher von der Oberseite zur Unterseite oder von der Unterseite zur Oberseite verläuft.

Die Vorrichtung, umfassend die folgenden Bestandteile, kann auch folgendermaßen beschrieben werden:
- einen Läutertiegel, der zumindest durch Seitenwände, die an einer Innenseite eine metallische Auskleidung als Schmelzkontaktfläche aufweisen, gebildet ist, so dass zumindest in dem Läutertiegel ein Volumen zum Läutern der Schmelze gebildet wird, das durch eine Grundfläche, eine Deckfläche und eine Mantelfläche definiert ist,
- wenigstens eine Heizeinrichtung zum konduktiven Beheizen der Auskleidung durch einen Stromfluss in der Auskleidung, so dass die Schmelze mittels der beheizten Auskleidung beheizbar ist, wobei die Heizeinrichtung und die Auskleidung über Zuleitungen miteinander verbunden sind, wobei
- die Zuleitungen die Auskleidung derart kontaktieren, dass in der Auskleidung zumindest abschnittsweise ein Stromfluss erzeugbar ist, welcher von der Deckfläche zur Grundfläche oder von der Deckfläche zur Grundfläche verläuft.

Zudem liegt im Bereich der Erfindung auch ein Verfahren zur Herstellung eines Glases und/oder einer Glaskeramik. Das Verfahren umfasst die folgenden Schritte:
Einschmelzen eines Gemenges zum Bereitstellen einer Glasschmelze,
- Läutern der Glasschmelze durch eine Temperaturerhöhung der Glasschmelze zumindest in einem Volumen, welches wenigstens abschnittsweise an eine Seitenwand angrenzt, wobei die Seitenwände zumindest eine, vorzugsweise an die Auskleidung grenzende, erste Lage und eine zweite Lage aufweisen, wobei die erste Lage eine gegenüber der zweiten Lage erhöhte Temperaturstabilität besitzt und die zweite Lage eine gegenüber der ersten Lage geringere Wärmeleitfähigkeit besitzt, wobei wenigstens die Seitenwand zumindest abschnittsweise konduktiv durch einen elektrischen Stromfluss beheizt wird,
wobei in der Seitenwand eine elektrische Potentialdifferenz derart bereitgestellt wird, dass die Richtung des Stromflusses in der Seitenwand entweder von oben nach unten oder von unten nach oben verläuft,
- Homogenisieren und/oder Konditionieren der geläuterten Glasschmelze,
- Formgebung und/oder Abkühlen und/oder Wärmebehandlung der homogenisierten und/oder konditionierten Glasschmelze, so dass ein Glas und/oder eine Glaskeramik bereitstellbar ist

Das Verfahren, umfassend die folgenden Schritte, kann auch folgendermaßen beschrieben werden:
Einschmelzen eines Gemenges zum Bereitstellen einer Glasschmelze,
- Läutern der Glasschmelze durch eine Temperaturerhöhung der Glasschmelze zumindest in einem Volumen, das durch eine Grundfläche, eine Deckfläche und eine Mantelfläche definiert ist, wobei die Mantelfläche an eine zumindest abschnittsweise konduktiv durch einen elektrischen Stromfluss beheizte Seitenwand angrenzt, wobei
in der Seitenwand eine elektrische Potentialdifferenz derart bereitgestellt wird oder bereitstellbar ist, dass die Richtung des Stromflusses in der Seitenwand von der Deckfläche zur Grundfläche oder von der Deckfläche zur Grundfläche verläuft,
- Homogenisieren und/oder Konditionieren der geläuterten Glasschmelze,
- Formgebung und/oder Abkühlen und/oder Wärmebehandlung der homogenisierten und/oder konditionierten Glasschmelze, so dass ein Glas und/oder eine Glaskeramik bereitstellbar ist.

In einer bevorzugten Ausführungsform des Verfahrens umfasst die Seitenwand an einer Innenseite eine Auskleidung, so dass das Volumen bzw. die Mantelfläche an die Auskleidung grenzt und die elektrische Potentialdifferenz in der Auskleidung bereitgestellt wird und die Schmelze über die Auskleidung beheizbar ist.

Weiterhin kann eine erfindungsgemäße Vorrichtung oder ein Verfahren zur Ausführung der Erfindung auch folgendermaßen beschrieben werden. Die Vorrichtung umfasst dabei die folgenden Bestandteile:
- einen Läutertiegel mit einer Oberseite und einer Unterseite, der zumindest durch Seitenwände, die vorzugsweise an einer Innenseite eine metallische Auskleidung als Schmelzkontaktfläche aufweisen, gebildet ist,
- wenigstens eine Heizeinrichtung zum konduktiven Beheizen der Seitenwand, vorzugsweise der Auskleidung, durch einen Stromfluss in der Seitenwand, vorzugsweise in der Auskleidung, so dass die Schmelze mittels der beheizten Seitenwand, vorzugsweise der Auskleidung, beheizbar ist, wobei die Heizeinrichtung und die Seitenwand, vorzugsweise die Auskleidung, über Zuleitungen miteinander verbunden sind, wobei
- die Zuleitungen die Seitenwand, vorzugsweise die Auskleidung, über zumindest einen oberen Anschluss und zumindest einen unteren Anschluss kontaktieren, wobei die Zuleitungen wenigstens ein oberes Anschlusselement und wenigstens ein unteres Anschlusselement zum Kontaktieren der Seitenwand, vorzugsweise der Auskleidung, umfassen. Das Verfahren kann in den Vorrichtungsmerkmalen entsprechenden Verfahrensschritten formuliert werden.

Das Verfahren ist insbesondere ausführbar mittels der erfindungsgemäßen Vorrichtung. Die Vorrichtung gemäß der Erfindung ist insbesondere ausgebildet zur Ausführung des erfindungsgemäßen Verfahrens. Vorzugsweise ist das erfindungsgemäße Verfahren kontinuierlich durchführbar.

Die erfindungsgemäße konduktive Beheizung der Seitenwand, vorzugsweise der Auskleidung der Seitenwand, stellt eine elektrische Widerstandsheizung der Seitenwand dar. Relevant ist hierbei die Richtung des in der Seitenwand erzeugten Stromflusses. Der Stromfluss verläuft sozusagen von oben nach unten oder umgekehrt. Der Stromfluss verläuft im Wesentlichen in der gesamten Seitenwand entweder von der Oberseite bzw. Deckfläche zur Unterseite bzw. Grundfläche oder umgekehrt. Vorzugsweise verläuft der Stromfluss über den gesamten Umfang der Seitenwand von der Deckfläche zur Grundfläche bzw. von der Oberseite zur Unterseite oder umgekehrt. Dies bedeutet jedoch nicht, dass die Richtung des Stromflusses in der gesamten Seitenwand parallel und/oder vertikal ist und/oder gerade verläuft.

Die konduktiv beheizte Auskleidung bedeckt abschnittsweise oder vollständig die Innenseite der Seitenwand. Sie stellt vollständig die Schmelzkontaktfläche des Läutertiegels bereit. Die Auskleidung wird bereitgestellt durch ein metallisches Blech. Die Auskleidung besitzt eine Dicke in einer Größenordnung von beispielsweise 0,2 mm bis 3 mm, bevorzugt 0,5 mm bis 2 mm. In einer Ausführungsform der Erfindung besitzt die Auskleidung abschnittweise einen veränderten Querschnitt, so dass die Temperatur in dem Abschnitt mit dem veränderten Querschnitt durch eine veränderte Stromdichte gezielt einstellbar ist.

In einer Ausgestaltung bildet die Auskleidung einen Kragen, welcher die Oberseite der Seitenwand abschnittsweise oder vollständig bedeckt. Vorzugsweise ist der Kragen vollständig oder abschnittsweise konduktiv beheizbar.

Eine weitere Ausführungsform der Erfindung ist dadurch gekennzeichnet, dass der Läutertiegel einen Boden besitzt, der zumindest durch die Auskleidung gebildet ist. Der Boden stellt die Unterseite bereit. Dabei grenzt die Grundfläche an den Boden an. Vorzugsweise ist der Boden nicht oder nur abschnittsweise konduktiv beheizbar. Denn im Allgemeinen liegt der Boden des Läutertiegels auf dem gleichen Potential oder wird der Boden auf das gleiche Potential gelegt. In Abhängigkeit von der Ausführungsform kann jedoch auch ein Stromfluss im Boden vorhanden sein, zum Beispiel bei der Verwendung einer einzelnen einseitig angeordneten Heizeinrichtung. In einer Ausführung der Erfindung sind die Seitenwände geneigt gegenüber dem Boden des Läutertiegels.

Die Schmelze wird auf eine Temperatur zum Läutern der Schmelze erwärmt. Die Temperatur zum Läutern der Schmelze ist abhängig von der jeweiligen Glassorte. Im Allgemeinen liegt die maximale Temperatur einer in den Läutertiegel oder in den Bereich zum Läutern eintretenden Schmelze etwa mindestens 200 °C und vorzugsweise maximal etwa 600°C, vorzugsweise etwa 400°C, unterhalb der höchsten Temperatur der Schmelze in dem Läutertiegel bzw. dem Bereich zum Läutern. Im Allgemeinen wird die Schmelze jedoch auf eine Temperatur von größer als 1500°C, bevorzugt größer als 1700°C, besonders bevorzugt von größer als 1800°C erwärmt.

Der Läutertiegel und insbesondere die Auskleidung wird bzw. werden nicht aktiv gekühlt. Es sind keine Kühleinrichtungen vorgesehen, welche zu einer großflächigen oder integralen gezielten Kühlung des Läutertiegels und insbesondere auch seiner Auskleidung vorgesehen sind. Vorzugsweise resultiert dies im Allgemeinen in eine Temperaturdifferenz zwischen der Schmelzkontaktfläche der Seitenwand, vorzugsweise der Auskleidung, und der Schmelze von kleiner oder gleich 50°C, bevorzugt von kleiner oder gleich 10°C.

Die Beheizung der Seitenwand, vorzugsweise der Auskleidung, und/oder der Durchsatz der Schmelze in dem Läutertiegel und/oder der Wärmetransport durch die Wand oder Seitenwand des Läutertiegels ist bzw. sind aneinander angepasst, so dass sich ein Gleichgewicht zwischen der zugeführten Energie und der abgeführten Energie einstellt und es zu keiner Überhitzung der Wandmaterialien führt.

Es ist jedoch erforderlich, dass die Materialien, welche zum Aufbau des Läutertiegels verwendet werden, eine entsprechende Temperaturstabilität besitzen. Zum Beispiel besitzt die Seitenwand, vorzugsweise die Auskleidung, eine entsprechende Temperaturstabilität von größer oder gleich 1500°C, bevorzugt von größer oder gleich 1700°C, besonders bevorzugt von größer oder gleich 1800°C.

Für eine Realisierung von Temperaturen in einem Bereich von kleiner als 1700°C sind die folgenden Metalle zum Aufbau der Seitenwand, vorzugsweise der Auskleidung, verwendbar. Das Metall ist wenigstens ein Metall ausgewählt aus einer Gruppe bestehend aus Pt, Rh, Ir, Ta, Mo, W und Nb.

Für eine Realisierung von Temperaturen in dem besonders bevorzugten Bereich von größer als 1800°C sind folgende Metalle zum Aufbau der Seitenwand, vorzugsweise der Auskleidung, verwendbar. Das Metall ist wenigstens ein Metall ausgewählt aus einer Gruppe bestehend aus Ir, Ta, Mo, W und Nb.

Vorzugsweise ist die Auskleidung eine Iridium-Auskleidung. Diese wird gebildet durch Iridium oder eine Iridium-Legierung. Eine solche Iridium-Auskleidung besitzt einen Anteil an Iridium von größer als etwa 50 Gew.-%, bevorzugt von größer als etwa 90 Gew.-%, besonders bevorzugt von größer als etwa 99 Gew.-%. Die vorstehend als bevorzugt bezeichneten Temperaturen sind zum Beispiel realisierbar mit der Iridium-Auskleidung.

Neben temperaturstabilen Materialien sind auch Materialien bevorzugt, welche eine möglichst geringe Wärmeleitfähigkeit besitzen, um einen möglichst geringen Energieverlust an die Umgebung zu haben. Da dies im Allgemeinen schwer mit einem einzigen Material zu realisieren ist, sind die Seitenwände in einer bevorzugten Ausführungsform mehrlagig aufgebaut.

In einer erfindungsgemäßen Ausgestaltung weisen die Seitenwände zumindest eine, vorzugsweise an die Auskleidung grenzende, erste Lage und eine zweite Lage auf. Die erste Lage besitzt eine gegenüber der zweiten Lage erhöhte Temperaturstabilität bzw. Wärmebeständigkeit. Die zweite Lage besitzt eine gegenüber der ersten Lage geringere Wärmeleitfähigkeit. Die erste Lage stellt im Wesentlichen die Standfestigkeit des Systems bereit. Die erste Lage besitzt eine gegenüber der zweiten Lage erhöhte Tragfähigkeit. Die zweite Lage stellt im Wesentlichen die thermische Isolation des Systems bereit. Vorzugsweise weist die erste Lage einen im Wesentlichen L-förmigen Querschnitt auf und erstreckt sich mit einem Schenkel nach außen hin über die zweite Lage.

In einer weiteren Ausgestaltung weisen die Seitenwände eine dritte Lage auf, welche zwischen der ersten Lage und der Auskleidung angeordnet ist. Vorzugsweise umfasst die dritte Lage ein Textilerzeugnis. Die dritte Lage ermöglicht zum Beispiel ein Gleiten der Auskleidung auf der ersten Lage bei thermischer Ausdehnung und kann den ersten thermischen Sprung bzw. eine thermische Anpassung auf die erste und/oder die zweite Lage bewirken.

Die erste Lage ist oder umfasst ein Spinell. Die erste Lage besitzt vorzugsweise eine Wärmeleitfähigkeit von 2 W/mK bis 4 W/mK. Die zweite Lage ist ein Isolationsmaterial, vorzugsweise ein Isolationsstein. Es ist oder umfasst FL30. Die zweite Lage besitzt vorzugsweise eine Wärmeleitfähigkeit von kleiner als 1 W/mK. Der Quotient, Wärmeleitfähigkeit der ersten Lage geteilt durch die Wärmeleitfähigkeit der zweiten Lage, liegt insbesondere bei einem Wert von größer oder gleich 2. Die dritte Lage kann ein Zirkonoxidflies sein.

Die Isolation bzw. der Wärmestrom durch die einzelnen Lagen ist so angepasst, dass in keiner Lage der Seitenwand die jeweilige kritische Temperatur wesentlich überschritten oder so lange überschritten wird, dass ein Kollabieren der Lage oder der Seitenwand auftritt. Die Wahl der einzelnen Materialien und/oder der Abmessungen und/oder der Geometrie der einzelnen Lagen und/oder der Seitenwand und/oder der Vorrichtung zum Läutern erfolgt entsprechend den jeweiligen Anforderungen, wie Läutervolumen, Durchsatz, Temperatur der Schmelze usw.

Von Relevanz ist nicht nur der Aufbau des Läutertiegels sondern auch die Ausgestaltung der Kontaktierung bzw. der Stromzuführung zur Seitenwand bzw. zur Auskleidung zum konduktiven Beheizen der Seitenwand bzw. der Auskleidung. so. Denn diese soll insbesondere eine sukzessive Erwärmung der Schmelze ermöglichen.

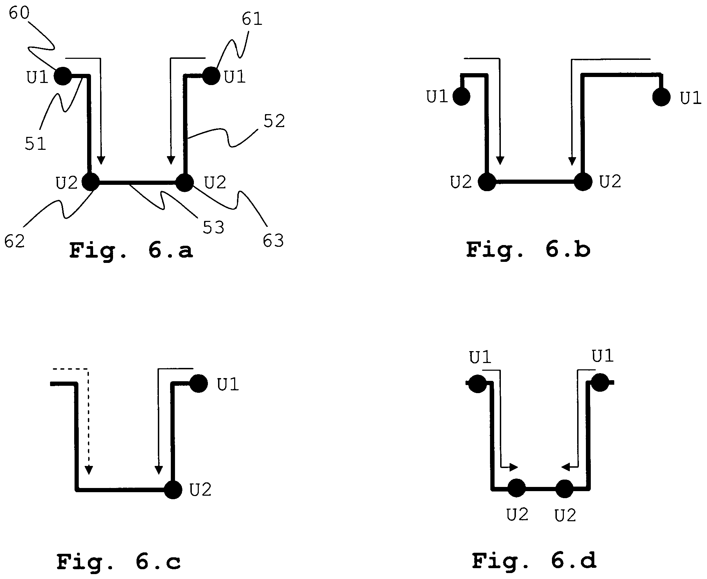

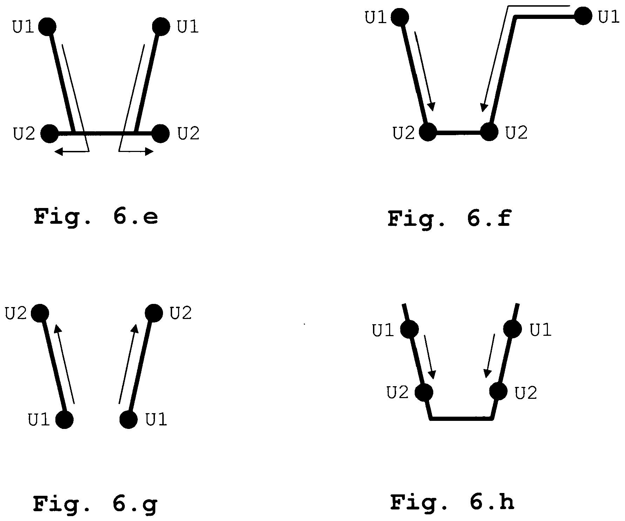

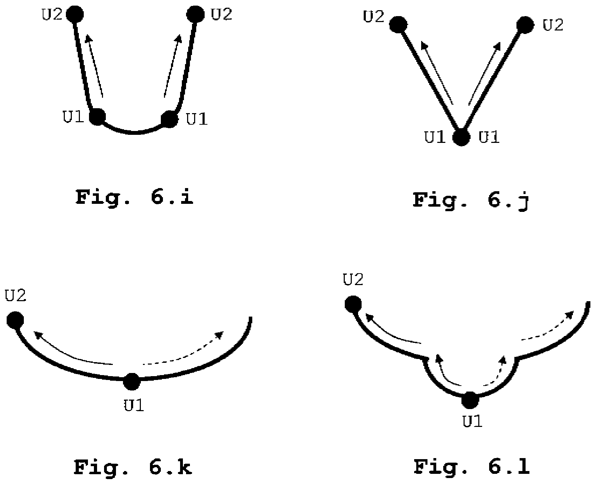

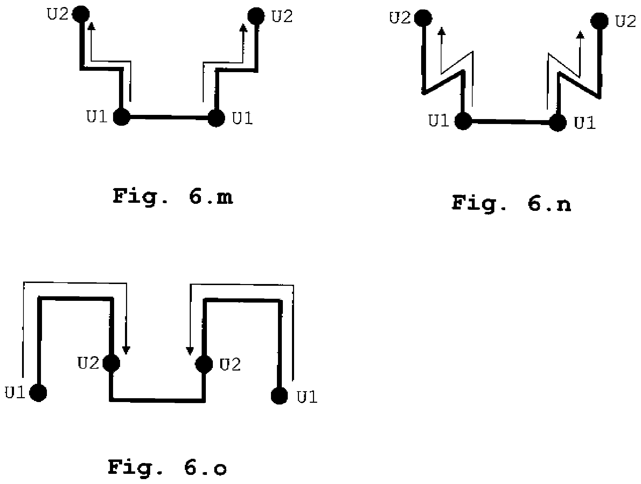

Die Zuleitungen kontaktieren die Seitenwand, vorzugsweise die Auskleidung, über zumindest einen oberen Anschluss und zumindest einen unteren Anschluss für die Auskleidung. Der obere und der untere Anschluss stellen den Übergang von den Zuleitungen auf die Auskleidung dar oder bereit. Zwischen dem oberen Anschluss und dem unteren Anschluss wird eine elektrische Spannung angelegt zum Bereitstellen des Stromflusses zum konduktiven Beheizen. Vorzugsweise ist die angelegte Spannung eine Wechselspannung, so dass der Stromfluss in der Seitenwand, vorzugsweise der Auskleidung, alternierend ist. Der obere Anschluss ist der Oberseite zugeordnet und der untere Anschluss ist der Unterseite zugeordnet. Dies bedeutet jedoch nicht, dass der obere Anschluss räumlich oberhalb des unteren Anschlusses angeordnet sein muss (zum Beispiel gezeigt in Figur 6.o). Es bedeutet vielmehr, dass der Auskleidung der Seitenwand der Strom mittels des oberen Anschlusses direkt (siehe dazu zum Beispiel Figur 6.e) oder indirekt (siehe dazu zum Beispiel Figur 6.a) zugeführt oder abgeführt wird, der Strom dann in der Auskleidung der Seitenwand von der Oberseite nach unten oder von der Unterseite nach oben fließt und dann mittels des unteren Anschlusses abgeführt bzw. zugeführt wird.

In einer erfindungsgemäßen Ausführungsform umfassen die Zuleitungen wenigstens ein oberes Anschlusselement und wenigstens ein unteres Anschlusselement zum Kontaktieren der Auskleidung. Dabei ist das obere Anschlusselement der Seitenwand und/oder dem Kragen der Auskleidung zugeordnet. Das untere Anschlusselement ist dem Boden der Auskleidung zugeordnet. Das obere und das untere Anschlusselement sind jeweils, insbesondere zumindest abschnittsweise, elektrisch leitfähig. Das obere und das untere Anschlusselement sind jeweils ein metallisches Bauteil oder umfassen jeweils ein Metall.

In einer Ausgestaltung ist das obere Anschlusselement als ein Mantel ausgebildet, welcher sich abschnittsweise oder vollständig über den Umfang der Seitenwand erstreckt und vorzugsweise an der Außenseite der Seitenwand anliegt.

In einer Ausgestaltung ist das untere Anschlusselement als eine Platte oder Blech ausgebildet, welche bzw. welches sich abschnittsweise oder vollständig über den Umfang der Unterseite und/oder des Bodens erstreckt und vorzugsweise an einer Außenkante der Unterseite und/oder des Bodens anliegt. Das untere Anschlusselement erstreckt sich zum Beispiel durch die Seitenwand oder unter der Seitenwand nach außen, so dass es insbesondere außerhalb des Läutertiegels kontaktierbar ist.

In einer weiteren Ausführungsform der Erfindung umfassen die Zuleitungen ein oberes Verbindungsmittel und ein unteres Verbindungsmittel zum elektrischen Verbinden der Auskleidung, vorzugsweise mittels des oberen und/oder des unteren Anschlusselements, mit der Heizeinrichtung.

Dabei erstreckt sich das obere Verbindungsmittel in einer Ausgestaltung abschnittsweise oder vollständig über den Umfang des Läutertiegels, vorzugsweise um das obere Anschlusselement herum. In einer Ausführungsform erstreckt sich dagegen das untere Verbindungsmittel abschnittsweise oder vollständig über den Umfang des Läutertiegels, vorzugsweise um das untere Anschlusselement herum.

Vorzugsweise sind das obere und/oder das untere Verbindungsmittel als metallische Platte oder Blech ausgebildet, so dass das obere und/oder das untere Anschlusselement und/oder die Auskleidung flächig kontaktierbar ist bzw. sind. Vorzugsweise besitzen diese eine Dicke von etwa 1 mm bis etwa 50 mm, bevorzugt von etwa 2 mm bis etwa 20mm. In einer bevorzugten Variante der Erfindung besitzen die Zuleitungen, vorzugsweise der obere Anschluss und der untere Anschluss, gegenüber der Auskleidung einen vergrößerten Querschnitt, so dass die Stromdichte in der Auskleidung gegenüber der Stromdichte in den Zuleitungen erhöht ist. Dagegen ist die innerhalb oder in der Auskleidung erzeugte Stromdichte im Wesentlichen gleich. Die Temperatur in der Auskleidung kann aber auch durch einen veränderten Querschnitt der Auskleidung gezielt verändert werden.

Eine Weiterbildung der Erfindung ist gekennzeichnet durch Einrichtungen zum Kühlen, die den Zuleitungen zugeordnet sind, so dass die Zuleitungen zumindest abschnittsweise kühlbar sind. Dadurch kann zum Beispiel eine unerwünschte Wärmeabgabe an die Umgebung und/oder eine Überhitzung des verwendeten Materials vermindert werden.

In einer Ausgestaltung ist die Heizeinrichtung ausgebildet zum Einspeisen des Stroms mit einer Frequenz von 10 bis 100 Hz, bevorzugt von 50 Hz. Dies resultiert in eine Vibration der Läutervorrichtung und unterstützt das Aufsteigen von Blasen in der Schmelze.

In einer Ausführungsform ist die Heizeinrichtung als ein Transformator ausgebildet. Die konkrete Auslegung der hier einsetzbaren Heizeinrichtung ist abhängig von den jeweils zu erzielenden Anforderungen, wie Läutervolumen, Durchsatz, Temperatur der Schmelze usw.. In einer erfindungsgemäßen Ausgestaltung sind in der Seitenwand, vorzugsweise in der Auskleidung, Stromdichten von bis zu 20 A/mm², bevorzugt von bis zu 30 A/mm² erreichbar. Im Allgemeinen kann die an der Seitenwand, vorzugsweise der Auskleidung, angelegte Potentialdifferenz in einer Größenordnung von 1 V bis 50 V und/oder der Gesamtstrom in einer Größenordnung von 5kA bis 100 kA liegen. Die Spannung ist eine Wechselspannung, zum Beispiel mit einer Frequenz in einem Bereich von 10 Hz bis 10 kHz.

In einer weiteren Ausführungsform der Erfindung sind noch Mittel zum induktiven Beheizen der Auskleidung vorgesehen, so dass die Schmelze zumindest abschnittsweise vorzugsweise zusätzlich induktiv beheizbar ist.

In einer weiteren Ausführungsform sind Gaszuführungen oder -zuleitungen vorgesehen, welche durch die Seitenwände oder Wand des Läutertiegels verlaufen, so dass an einer von der Schmelze abgewandten Seite der Auskleidung eine definierte Atmosphäre, vorzugsweise eines nicht-oxidierenden Fluids, bereitstellbar ist. In einer Ausführungsform wird das Fluid als ein, vorzugsweise Stickstoff, Argon, Helium und/oder Formiergas umfassendes, Gas bereitgestellt.

Schließlich liegt im Bereich der Erfindung auch ein Produkt aus Glas, vorzugsweise einem optischen und/oder technischem Glas, und/oder Glaskeramik das mit dem erfindungsgemäßen Verfahren herstellbar oder hergestellt ist.

Die vorliegende Erfindung wird anhand der nachfolgenden Ausführungsbeispiele im Einzelnen erläutert. Hierzu wird auf die beiliegenden Zeichnungen Bezug genommen. Die in den einzelnen Zeichnungen verwendeten gleichen Bezugszeichen beziehen sich auf die gleichen Teile.
Fig. 1.a und 1.b zeigen beispielhaft eine schematische Darstellung der einzelnen Schritte oder Vorrichtungen in der Glasherstellung in einer Aufsicht (Fig. 1.a) und einer Seitenansicht (Fig. 1.b).
Fig. 2.a und 2.b zeigen das erzielte Temperaturprofil einer Schmelze in einem erfindungsgemäßen Läutertiegel, welcher beispielhaft einen Zulauf im Boden ("Bottom-Zulauf" / Fig. 2.a) oder einen seitlichen Zulauf im oberen Bereich ("Top-Zulauf" / Fig. 2.b) und jeweils einen seitlichen Ablauf aufweist.
Fig. 3.a und 3.b zeigen eine schematische Darstellung einer ersten nicht erfindungsgemäßen Ausführungsform eines Läutertiegels mit einer einschichtigen Wand, wichtig zum Verständnis der Erfindung, und einer zweiten beispielhaften Ausführungsform eines Läutertiegels mit einer zweischichtigen Wand.
Fig. 4.a bis 4.d zeigen eine schematische Darstellung einer dritten beispielhaften Ausführungsform eines Läutertiegels mit einer dreischichtigen Wand in einem vertikalen Querschnitt ohne (Fig 4.a) und mit elektrischen Verbindungsmitteln (Fig 4.b), in einer Aufsicht (Fig 4.c) und in einem horizontalen Querschnitt (Fig. 4.d).
Fig. 5.a bis 5.c zeigen erfindungsgemäße Weiterbildungen der in Fig. 4.a dargestellten Ausführungsform.
Fig. 6.a bis 6.o zeigen verschiedene Ausführungsformen des Läutertiegels mit verschiedenen Anordnungen der Kontakte bzw. der unteren und oberen Anschlüsse zum Einspeisen des Stroms.
Fig. 7 zeigt eine schematische Detailansicht des Ausschnitts Z1 aus Figur 4.a mit Gaszuführungen.
Fig. 8.a und 8.b zeigen eine schematische Detailansicht des Ausschnitts Z2 aus Figur 4.a mit einer ersten und zweiten beispielhaften Ausgestaltung des Übergangsbereichs.

### Detaillierte Beschreibung der Erfindung

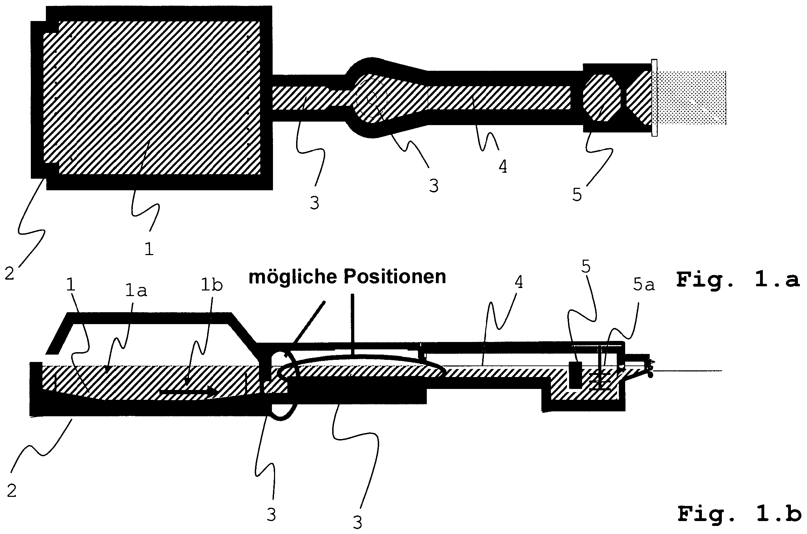

Die Figuren 1.a und 1.b illustrieren einzelne Schritte in der Glasherstellung und zwei mögliche Positionierungen eines erfindungsgemäß ausgebildeten und erfindungsgemäß betriebenen Läutertiegels 3. Es ist beispielhaft eine Anlage zum Schmelzen, Läutern, Konditionieren, Homogenisieren und zur Formgebung einer Glasschmelze 1 und somit eine Anlage zur Herstellung von Glas dargestellt.

Der erste Prozessschritt in der Glasherstellung stellt das Einschmelzen der Ausgangssubstanz, nämlich des Gemenges, in einer Schmelzwanne 2 dar. Beispielhaft dargestellt ist ein offener Schmelztiegel 2 mit offener Schmelzoberfläche 1a. Sobald das Gemenge zähflüssig geworden ist, beginnt ein erstes Vorläutern der Schmelze 1 in dem Schmelzwanne 2.

Um ein Höchstmaß an Homogenität und Blasenfreiheit in der Schmelze 1 zu erzielen, bedarf es gründlicher Durchmischung und Entgasung des Glasschmelze 1. Daher schließt sich dem Einschmelzen die Läuterung der Glasschmelze 1 in einem Bereich zum Läutern 3 an. Der Bereich zum Läutern 3 wird auch als Läuterkammer 3 oder Läutertiegel 3 bezeichnet. Ein wesentliches Ziel der Läuterung ist die physikalisch und chemisch in der Schmelze gebundenen Gase aus der Schmelze 1 zu entfernen.

Es sind zwei mögliche Positionen für einen erfindungsgemäß ausgebildeten bzw. betriebenen Läutertiegel 3 dargestellt.

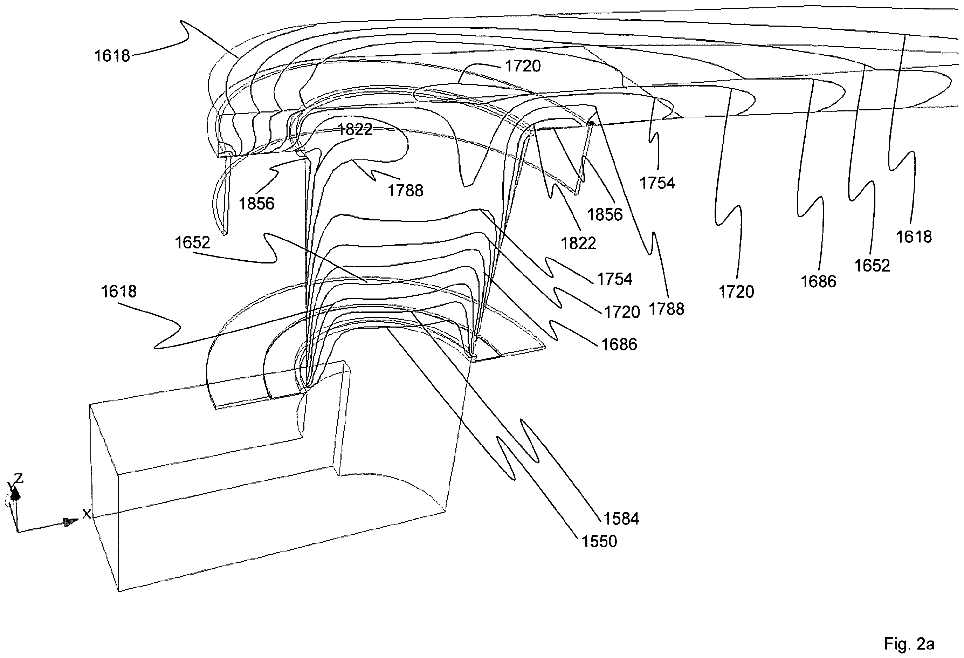

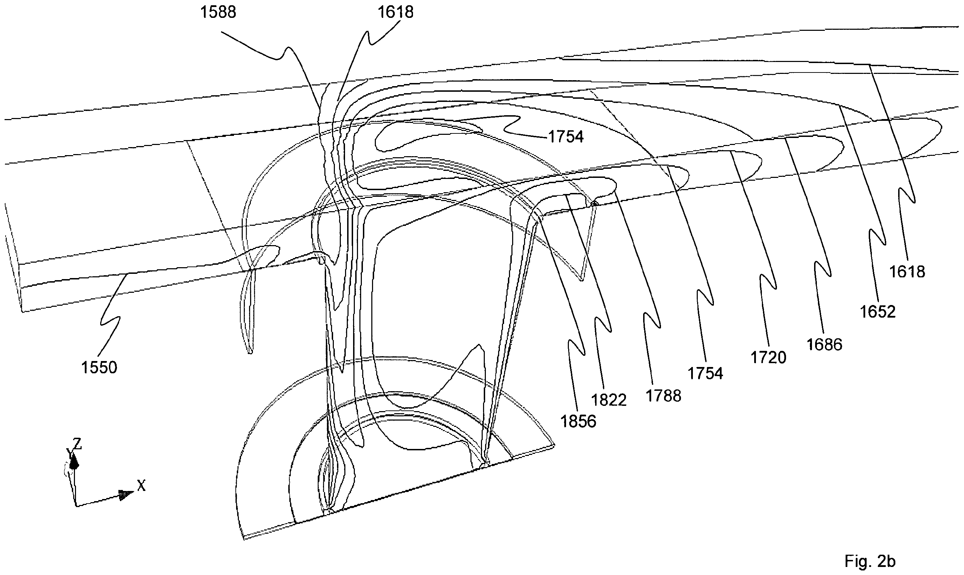

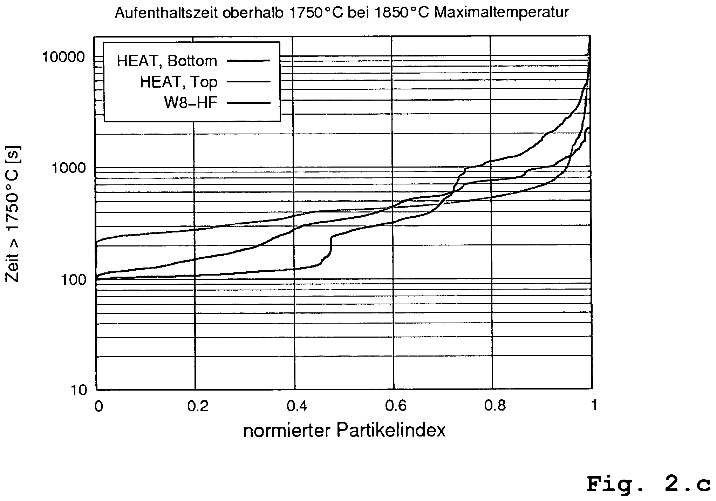

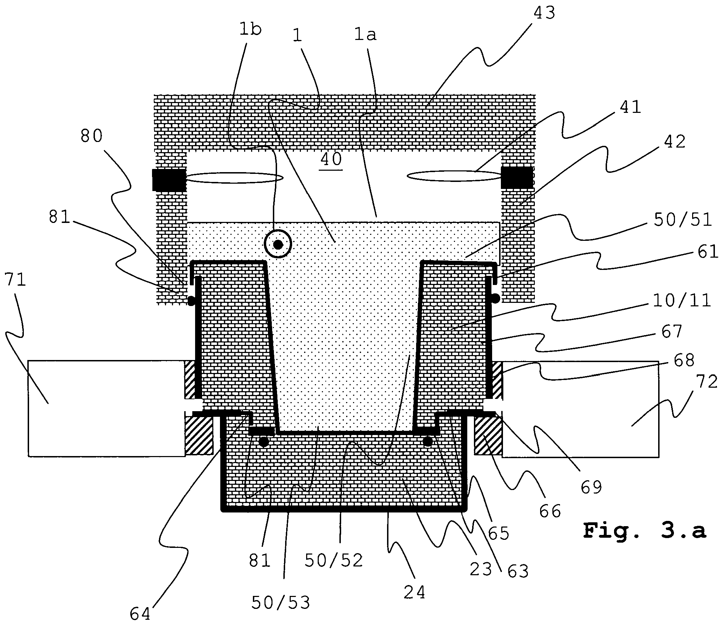

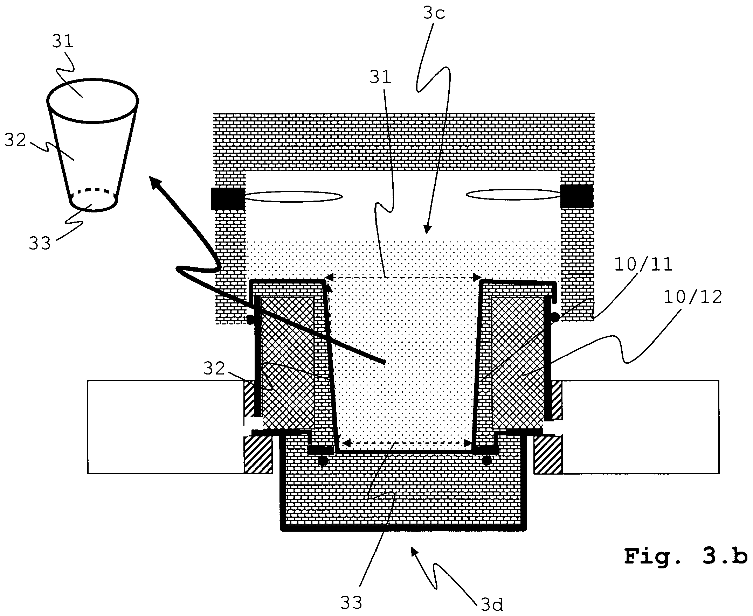

Der erfindungsgemäße Läutertiegel 3 kann sich zum einen unmittelbar oder direkt dem Schmelztiegel 2 anschließen und als Läutertiegel 3 mit einem Zulauf im Boden ausgebildet sein und einem seitlichen Ablauf im oberen Bereich (siehe dazu das in Figur 2.a gezeigte Temperaturprofil). In dieser Variante wird der Läutertiegel 3 durch die Seitenwände 10 bzw. die Mantelfläche 32 gebildet. Er besitzt eine offene Grundfläche 33 und eine offene Deckfläche 31. Die Grundfläche 33 kann auch als Boden oder Unterseite bezeichnet werden. Die Deckfläche 31 kann auch als Oberseite bezeichnet werden (siehe dazu das zu Figur 3b hinzugefügte Schema).

Zwischen dem Schmelztiegel 2 und dem Läutertiegel 3 kann aber auch zunächst eine Art Rinne, die hier eher eine Art seitlichen Zulauf darstellt, angeordnet sein, über welche die Schmelze 1 dem Läutertiegel 3 zugeführt wird. Dieser kann in diesem Fall sowohl mit einem seitlichen Zulauf 3a als auch einem seitlichen Ablauf 3b im oberen Bereich des Läutertiegels 3 ausgebildet sein (siehe dazu das in Figur 2.b dargestellte Temperaturprofil).

Unter Homogenisierung wird die Auflösung und gleichmäßige Verteilung aller Bestandteile sowie die Beseitigung von Schlieren verstanden. Unter der Konditionierung einer Schmelze 1 wird verstanden, die Temperatur der Schmelze 1 schnell und möglichst exakt einzustellen. Dies ist beispielsweise in Rinnensystemen von Glasschmelzanlagen der Fall, wenn die Aufschmelz- und Läuterprozesse abgeschlossen sind und das Glas auf eine gewünschte Formgebungstemperatur gebracht werden soll.

Dem Läutertiegel 3 schließt sich in Fließrichtung der Schmelze 1 eine Rinne 4 an, in welcher ein Konditionieren der Schmelze 1 erfolgt. Daher kann die Rinne 4 auch als Konditionierungseinrichtung 4 bezeichnet werden. Über diese wird die Schmelze 1 einer Homogenisierungseinrichtung 5 zugeführt. Diese umfasst eine in einer Wanne angeordnete Rührvorrichtung 5a, welche dem Homogenisieren der Schmelze 1 und dem Entfernen von Schlieren aus der Schmelze 1 dient. Dem Homogenisieren der Glasschmelze 1 schließt sich die Formgebung 5 des Glases an. Im Allgemeinen unterliegt das fertige Glas immer einer formgebenden Behandlung. Je nach Produkt wird das Glas unterschiedlich geformt. Es gibt fünf grundlegende Verarbeitungsmethoden für Glas in plastischem Zustand: Gießen, Blasen, Ziehen, Pressen und Walzen. Die Formgebung beginnt entweder erst nach einem langsamen, völligen Erstarren der Glasmasse oder in noch halbflüssigem, zähem Zustand des Glases oder schon bei hoher Temperatur und in dünnflüssigem Zustand der Glasmasse. Insbesondere zur Herstellung einer Glaskeramik ist noch eine Wärmebehandlung erforderlich. Dies wird auch als Keramisieren bezeichnet.

Die Figuren 2.a und 2.b zeigen das Temperaturprofil einer Schmelze 1 jeweils in einem erfindungsgemäßen Läutertiegel 3 als Ergebnis einer Simulation. Konkrete beispielhafte Ausgestaltungen eines erfindungsgemäßen Läutertiegels 3 für das in Figur 2.b dargestellte Temperaturprofil sind in den Figuren 3.a, 3.b, 4.a und 5.a bis 5.c dargestellt. In den Ausführungsformen ist in dem Läutertiegel 3 oberhalb der Schmelze 1 ein Raum bzw. ein Volumen gebildet. Es ist somit jeweils eine offene Schmelzoberfläche 1a vorhanden.

Zunächst zeigt Figur 2.a die bei der Beschreibung der Figur 1 zuerst genannte Ausführungsform und Positionierung eines erfindungsgemäßen Läutertiegels 3. Dieser besitzt einen Zulauf für die Schmelze 1, der im Boden des Läutertiegels 3 angeordnet ist. Der Ablauf ist im dagegen oberen Bereich des Läutertiegels 3 angeordnet. Der Läutertiegel 3 ist somit eine Art Behälter, welcher an seinen Stirnflächen, d.h. an der Grundfläche 33 und der Deckfläche 31, oder an seiner Unterseite und Oberseite offen ist. Der Läutertiegel 3 kann abschnittsweise die Gestalt eines geraden oder schiefen Kegelstumpfes besitzen. An der Innenseite des Läutertiegels 3 ist als Schmelzkontaktfläche eine Auskleidung 50 angeordnet, die konduktiv und gegebenenfalls noch zusätzlich induktiv beheizt werden kann.

Im Allgemeinen liegt die maximale Temperatur der in den Läutertiegel 3 eintretenden Schmelze 1 in etwa mindestens 200 °C und vorzugsweise maximal in etwa 400°C unterhalb der höchsten Temperatur der Schmelze 1 in dem Läutertiegel 3 bzw. dem Bereich zum Läutern 3. Die Schmelze 1 tritt beispielsweise in dem Hochtemperaturläuterbereich, insbesondere mit einem besonders bevorzugten Temperaturbereich von größer als 1800°C, mit einer Temperatur von etwa 1500°C bis etwa 1600°C in den Läutertiegel 3 ein. Die Schmelze 1 wird durch die beheizte Auskleidung 50 nach und nach indirekt erwärmt und steigt nach oben. Am Ende bzw. im Bereich der oberen Kante des Läutertiegels 3, d.h. am Ausgang des Läutertiegels 3 besitzt die Schmelze 1 ihre höchste Temperatur und somit ihre geringste Viskosität. Die höchste Temperatur liegt hier in einem Bereich von etwa 1850°C bis etwa 1900°C. Zudem ist in diesem Bereich der Weg zur Schmelzoberfläche 1a am geringsten. In der Schmelze 1 vorhandene oder entstandene Blasen treten aus der Schmelzoberfläche 1a aus.

Die in der Auskleidung 50 vorherrschende Temperatur ist größer als die Temperatur in der Schmelze 1, die in Kontakt mit der Auskleidung 50 steht. Sie liegt aber in einer ähnlichen Größenordnung wie die Temperatur in der Schmelze 1. Der Differenzbetrag der Temperatur des Teils der Schmelze 1, der in Kontakt mit der Auskleidung 50 steht und der Temperatur in der Auskleidung 50 beträgt kleiner oder gleich 100°C, vorzugsweise kleiner oder gleich 50°C.

Figur 2.b zeigt eine zweite Ausführungsform eines erfindungsgemäß ausgestalteten Läutertiegels 3. Dieser besitzt einen Zulauf 3a für die Schmelze 1, der im oberen Bereich des Läutertiegels 3 angeordnet ist. Der Ablauf 3b ist ebenso im oberen Bereich des Läutertiegels 3 angeordnet, jedoch auf der Seite, die dem Zulauf 3a gegenüberliegt. Der Läutertiegel 3 ist eine Art Behälter, der an seiner oberen Stirnfläche oder Deckfläche 31 oder Oberseite offen ist und an seiner Unterseite bzw. an der Grundfläche 33 durch einen dem Boden geschlossen ist. Der Läutertiegel 3 kann abschnittsweise die Form eines geraden oder schiefen Kegelstumpfes besitzen. An der Innenseite des Läutertiegels 3 ist als Schmelzkontaktfläche eine Auskleidung 50 angeordnet, die konduktiv und gegebenenfalls zusätzlich induktiv beheizt wird. Die Schmelze 1 tritt seitlich von oben in den Läutertiegel 3 ein. Die Schmelze 1 tritt mit einer Temperatur von etwa 1500°C bis etwa 1600°C in den Läutertiegel 3 ein. Die Schmelze 1 stürzt zunächst in dem Läutertiegel 3 nach unten. Sie fließt entlang der beheizten Auskleidung 50. Durch die beheizte Auskleidung 50 wird sie nach und nach erwärmt und steigt auf der gegenüberliegenden Seite des Läutertiegels 3 wieder nach oben. Am Ende bzw. im Bereich der oberen Kante des Läutertiegels 3, d.h. am Ausgang oder Ablauf 3b des Läutertiegels 3 besitzt die Schmelze 1 ihre höchste Temperatur und somit ihre geringste Viskosität. Die höchste Temperatur liegt hier in einem Bereich von etwa 1850°C bis etwa 1900°C. Zudem ist in diesem Bereich der Weg zur Schmelzoberfläche 1a am geringsten. In der Schmelze 1 vorhandene oder entstandene Blasen treten aus der Schmelzoberfläche 1a aus. Die in der Auskleidung 50 vorherrschende Temperatur ist größer als die Temperatur in der Schmelze 1, die in Kontakt mit der Auskleidung 50 steht. Sie liegt aber in einer ähnlichen Größenordnung wie die Temperatur in der Schmelze 1. Der Differenzbetrag der Temperatur des Teils der Schmelze 1, der in Kontakt mit der Auskleidung 50 steht und der Temperatur in der Auskleidung 50 beträgt kleiner oder gleich 100°C, vorzugsweise kleiner oder gleich 50°C.

Simulationsergebnisse zeigen, dass die Verweilzeit der Schmelze 1 in dem erfindungsgemäßen Läutertiegel 100, in der die Schmelze 1 einer Läutertemperatur von größer als 1750°C ausgesetzt ist, gegenüber dem im Stand der Technik beschriebenen System (siehe dazu im einleitenden Teil der Beschreibung) erhöht ist. Sogenannte Kurzschlussströmungen werden verhindert. Unter einer Kurzschlussströmung der Schmelze 1 wird eine Strömung oder ein Bereich der Schmelze 1 verstanden, die bzw. der nur eine kurze Aufenthaltsdauer in der Läuterkammer 3 hat, so dass für diese Strömung oder diesen Bereich nur eine unzureichende Läuterung erreichbar ist. In überraschender Weise wurde festgestellt, dass es nicht erforderlich ist, einen großen Temperaturgradienten in der Läuterkammer 3 bereitzustellen, wie es zum Beispiel durch den Einsatz gekühlter Wände derzeit gemacht wird (siehe im einleitenden Teil der Beschreibung). Das Temperaturprofil, das mit einem erfindungsgemäß aufgebauten Läutertiegel 3 ohne aktive Kühlung erzielbar ist, ist ausreichend zur Erzeugung stabiler Konvektionswalzen.

Erfindungsgemäß werden keine aktiv gekühlten Wände oder Flächen, insbesondere bei Temperaturen von größer als etwa 1700°C, eingesetzt. Stattdessen werden ausreichend isolierte Wände eingesetzt, so dass das Wandmaterial oder Isolationsmaterial nicht überlastet wird. Denn die Wände bzw. die erste und/oder die zweite Lage der Wand sind mindestens so heiß wie das Glas in mittelbaren Kontakt über die Auskleidung. Die Isolation ist angepasst bzw. es wird ein ausreichender Wärmestrom eingestellt, so dass auf der einen Seite die Wand- bzw. die Isolationsmaterialien nicht überlastet werden und auf der anderen der Wärmestrom durch die Wände hinsichtlich der Wirtschaftlichkeit reduziert, vorzugsweise minimiert, ist. Dies wird erreicht mit einer entsprechenden Wahl der Wandmaterialien und der Dicke der Wände bzw. der einzelnen Lagen.

Konkrete Beispiele für einen erfindungsgemäßen Läutertiegel 3 sind nachfolgend angeführt.

Figur. 3.a zeigt eine schematische Darstellung einer ersten, nicht erfindungsgemäßen, zum Verständnis der Erfindung wichtigen Ausführungsform eines Läutertiegels 3 in einem Querschnitt.

Die Läuterkammer 3 besitzt einen einschichtigen Aufbau. Die Seitenwände 10 und der Boden 23 der Läuterkammer 3 werden jeweils durch eine Wand 11 gebildet. Die Seitenwände 10 und der Boden 23 bilden zusammen den Innenraum der Läuterkammer 3. Sie bilden die Grundfläche 33, die Mantelfläche 32 und die Deckfläche 31 des Bereichs zum Läutern 3 (siehe dazu Figur 3.b). Die Seitenwände 10 und der Boden 23 sind aus einem feuerfesten Material aufgebaut. Der Innenraum oder die Schmelzkonktaktbereiche der Läuterkammer 3 sind mit einem metallischen Material 50, vorzugsweise mit einem Blech, ausgekleidet. Die Innenseite der Läuterkammer 3 ist mit der metallischen Auskleidung 50 bedeckt.

Die Auskleidung 50 stellt vorzugsweise vollständig die Schmelzkontaktfläche des Läutertiegels 3 bereit. Die Auskleidung 50 bedeckt den Boden 53 und die Seitenwände 53 des Läutertiegels 3. Zusätzlich erstreckt sich die Auskleidung 50 auch noch über die innere obere Kante des Läutertiegels 3 bzw. über die innere obere Kante seiner Seitenwand 10. Sie liegt auf der Oberseite 10a der Seitenwand 10 auf und bedeckt sie dabei vorzugsweise vollständig. Die Auskleidung 50 bildet einen Kragen 51. Der Kragen 51 ist geneigt zur Seitenwand 10. Der Kragen 51 ist sozusagen "abgeknickt". Er bildet einen Winkel von etwa 45° bis 135°, hier von etwa 90°, mit der Seitenwand 10. Zudem erstreckt sich die Auskleidung 50 oder der Kragen 51 der Auskleidung 50 auch noch über die äußere Oberkante des Läutertiegels 3 bzw. seiner Seitenwand 10 hinaus. Dieser Bereich liegt an der Außenseite des Läutertiegels 3 an und bedeckt einen oberen Abschnitt seiner Seitenwand 10. Der Kragen 51 zieht sich zum einen mindestens hinreichend weit zur Seite, so dass eine für die Seitenwände 10 kritische Temperatur an den Seitenwänden 10 nicht oder zumindest nicht wesentlich überschritten wird. Die Breite des Kragens 51 wird zum anderen durch eine stärker werdende Neigung zum seitlichen Überströmen des Tiegels begrenzt. Vorzugsweise ist die Breite und/oder Länge des Kragens 51 so gewählt, dass Kurzschlussströmungen wesentlich vermeidbar sind.

Der Bereich der Auskleidung 50, der sich an der Außenseite der Seitenwand 10 nach unten hin erstreckt, bildet einen oberen Anschluss 60 und 61 für eine Heizeinrichtung. In dem Beispiel werden eine erste Heizeinrichtung 71 und eine zweite Heizeinrichtung 72 für die konduktive Beheizung der Auskleidung 50 eingesetzt. Es können dazu ein erster oberer Anschluss 60 (Das Bezugszeichen ist in dieser Figur nicht eingezeichnet.) für die erste Heizeinrichtung 71 und ein zweiter oberer Anschluss 61 für die zweite Heizeinrichtung 72 bereitgestellt werden. Der erste obere Anschluss 61 und der zweite obere Anschluss 62 befinden sich gegenüberliegend (siehe dazu auch die Figuren 6a bis 6.g). Der Bereich der Auskleidung 50, welcher den Boden 53 der Läuterkammer 3 bildet, stellt den weiteren, hier unteren, Anschluss 62 und 63 für die Heizeinrichtungen 71 und 72 bereit. Es können ein erster unterer Anschluss 62 (Das Bezugszeichen ist in dieser Figur nicht eingezeichnet.) für die erste Heizeinrichtung 71 und ein zweiter unterer Anschluss 63 für die zweite Heizeinrichtung 72 bereitgestellt werden.

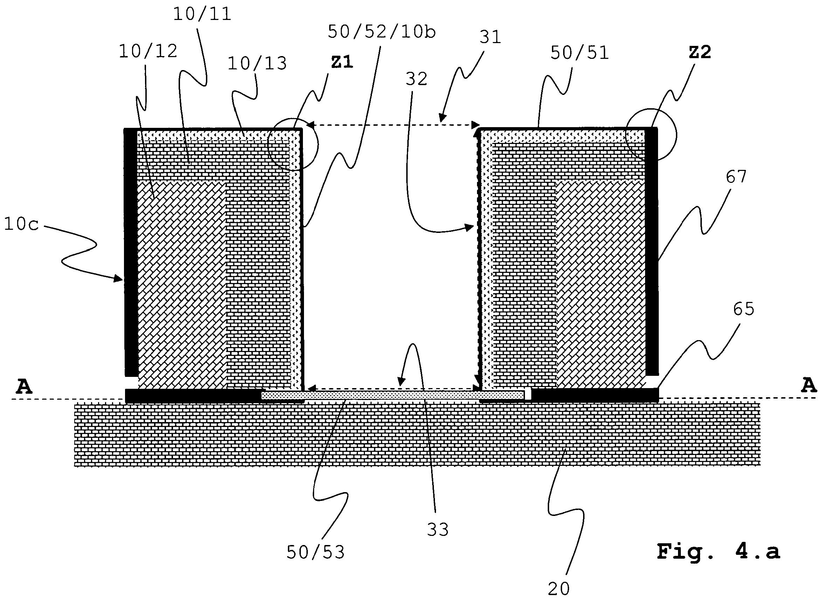

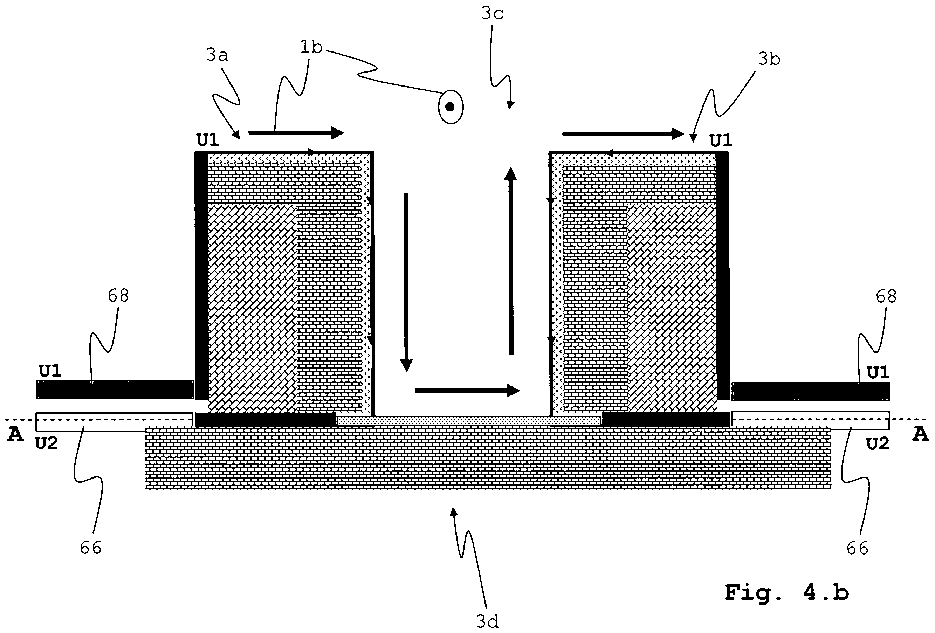

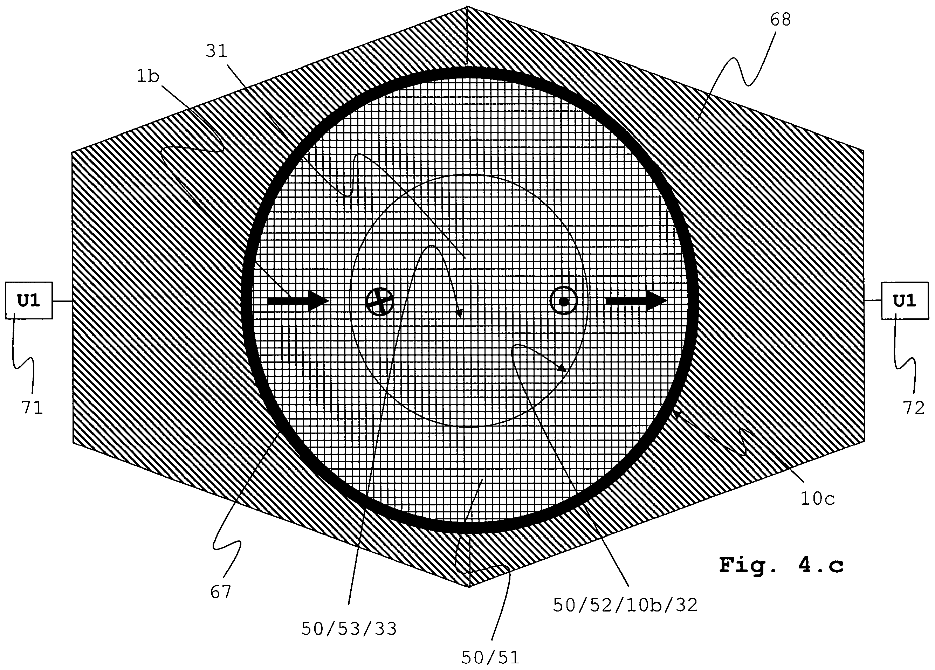

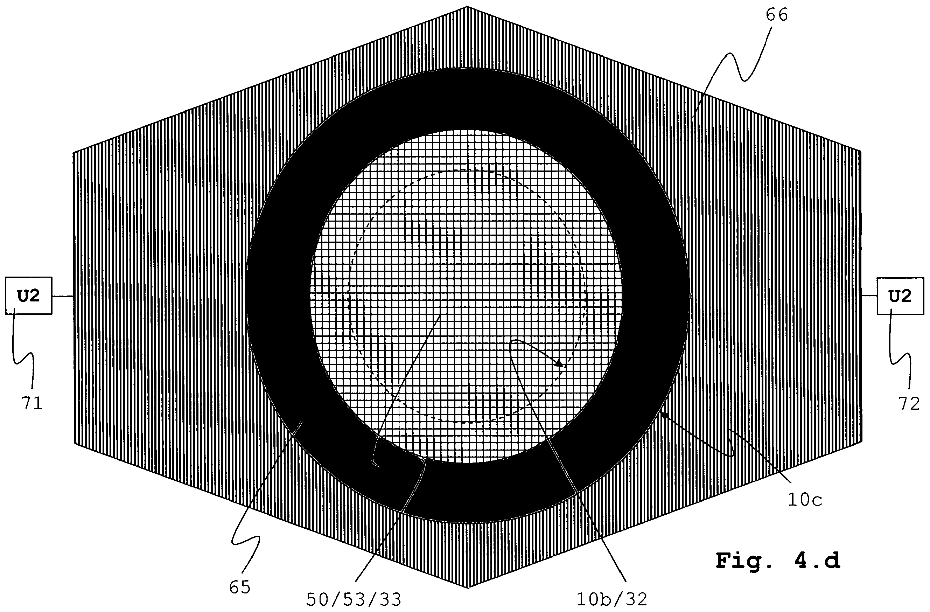

Die erste und die zweite Heizeinrichtung 71 und 72 sind vorzugsweise jeweils ein Transformator. Mittels der beiden Transformatoren wird die Auskleidung 50 konduktiv beheizt. Die Schmelze 1 kann jedoch auch nur mittels einer einzelnen Heizeinrichtung, hier einer der beiden Heizeinrichtungen 71 oder 72, konduktiv beheizt werden. Die Schmelze 1 wird somit im Wesentlichen nicht selbst beheizt sondern indirekt mittels der konduktiv beheizten Auskleidung 50. Weitere Details zu dem der Erfindung zugrunde liegenden Prinzip der Beheizung sind in der Beschreibung zu den Figuren 4.a bis 4.d erläutert.

Die Anwendung zusätzlicher Heizungen, vorzugsweise zur direkten Beheizung der Schmelze 1, beispielsweise durch in der Schmelze 1 angeordnete Elektroden, oder mittels Strahlungsheizung, beispielsweise mittels eines Brenners oder eines elektrisch beheizten Wärmestrahlers, ist möglich.

Als Beispiel sind in Figur 3.a im Bereich oberhalb der Schmelzoberfläche 1a, im sogenannten Oberofen 40, optionale Brenner 41 angeordnet, um bei Bedarf ein Abkühlen der Schmelzoberfläche 1a zu verhindern. Zusammen mit den Brennern 41 wird der Oberofen 40 durch die Decke 43 und die Seitenwände 42 gebildet. Die Decke 43 und die Seitenwände 42 sind aus einem feuerfesten Material, wie zum Beispiel Quarzal (siliziumreiche Keramik), Mullit und/oder HZFC aufgebaut. Die Seitenwände 42 erstrecken sich nach unten hin über die Oberkante des Läutertiegels 3 bzw. über die Oberkante seiner Seitenwände 10 hinaus.

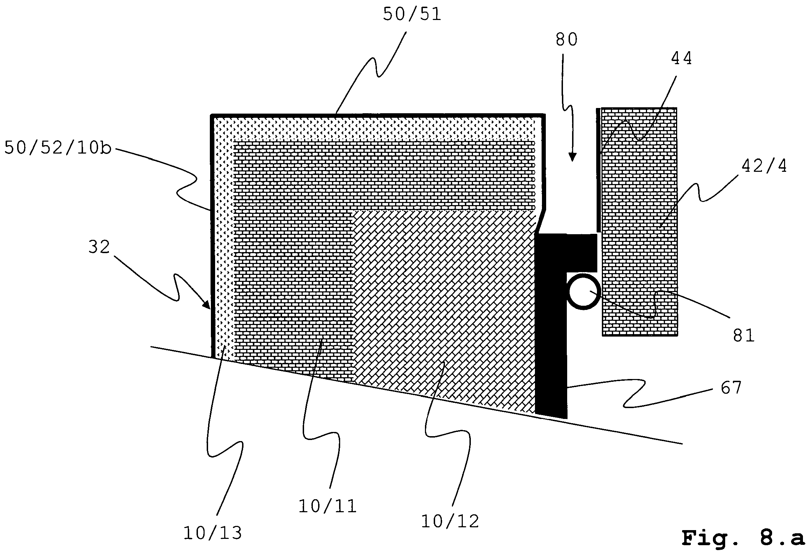

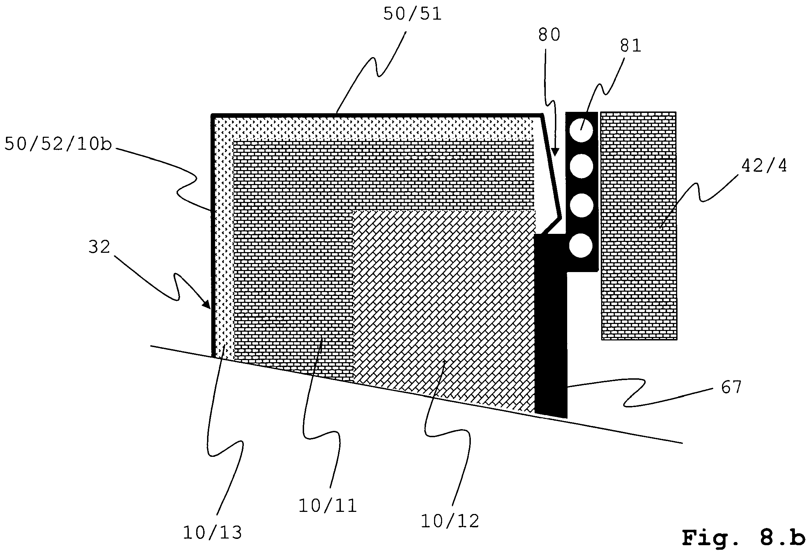

In dem Übergangsbereich zwischen dem Oberofen 40 und dem Läutertiegel 3 ist ein Spalt ausgebildet, insbesondere um thermische Ausdehnungen tolerieren zu können. In diesen Bereich hinein erstreckt sich, wie vorstehend beschrieben, auch die Auskleidung 50. In diesem Übergangsbereich ist, insbesondere um den aus Läutertiegel 3 und Oberofen 40 gebildeten Innenraum von der Umgebung abzudichten, eine Einrichtung zur Kühlung 81, vorzugsweise Wasserkühlung, wie zum Beispiel ein wasserdurchflossenen Rohr, angeordnet. Die Schmelze 1, die auch in den Übergangsbereich hinein fließt, friert dort ein und dichtet den Übergangsbereich ab. Es wird ein sogenannter Verglasungskragen 80 gebildet. Dadurch kann ein Kontakt der Auskleidung 50, mit dem in der Umgebung vorhandenen Sauerstoff unterbunden werden. Dies ist insbesondere dann wichtig, wenn die Auskleidung 50 durch beispielsweise Iridium gebildet wird, das bei hohen Temperaturen nicht oxdidationsstabil ist. Die Glasschmelze 1 überdeckt den gesamte Auskleidung 50 oder den gesamten Kragen 51, so dass keine 3-Phasengrenze existiert. Weitere Details oder weitere Ausgestaltungen des Verglasungskragens 80 sind in den Figuren 8.a und 8.b gezeigt.

Der Teil der Auskleidung 50, der den Boden 53 bildet, liegt auf einer Wand 23 auf, die dem Boden die Standfestigkeit verleiht. Diese Wand 23 stellt eine Art Fundament für den Boden dar. Um den Läutertiegel 3 wirksam von der Umgebung abzuschirmen, ist das Fundament 23 von einem gasdichten Kasten 24 eingeschlossen.

Zusammenfassend zeigt Figur 3.a einen Läutertiegel 3, der eine Wand 10 und 23 aus einem einschichtigen oder -lagigen Aufbau besitzt. Die eine Lage 11 der Wand 10 stellt die mechanische Festigkeit oder Standfestigkeit des Läutertiegels 3, insbesondere auch bei Temperaturen von größer als etwa 1700°C in der Schmelze 1, bereit. Zudem besitzt diese eine Lage 11 auch eine ausreichend geringe Wärmeleitfähigkeit, so dass die erzeugte Wärme im System bleibt und nicht an die Umgebung abgegeben wird. Der Boden 23 und die Seitenwände 10 können, wie in der Figur 3.a dargestellt, auch einstückig ausgebildet bzw. durch ein einzelnes Bauteil bereitgestellt sein.

Figur 3.b illustriert zunächst ein Volumen zum Läutern, das durch eine Grundfläche 33, eine Deckfläche 31 und eine Mantelfläche 32 definiert ist. Das Volumen zum Läutern muss sich hierbei nicht auf das beschriebene Volumen beschränken sondern kann auch das Volumen oberhalb des Kragens 51 umfassen. Weiterhin zeigt Figur 3.b eine erfindungsgemäße Weiterbildung der in Figur 3.a gezeigten Anlage 3. Die Seitenwand 10 ist nicht mehr einlagig sondern zweilagig aufgebaut. Die erste Lage 11, die an die Auskleidung 50 grenzt, besitzt eine mit der Temperaturstabilität der Auskleidung 50 vergleichbare Temperaturstabilität und verleiht dem Tiegel 3 die notwendige Standfestigkeit.

Vorzugsweise hat die erste Lage 11 eine Temperaturstabilität von bis zu etwa 2000°C. In einem Beispiel ist die erste Lage 11 aus einem feuerfesten keramischen Material, vorzugsweise basierend auf ZrO₂und/oder Spinell, aufgebaut.

Die zweite Lage 12 besitzt gegenüber der ersten Lage 11 eine geringere Temperaturstabilität. Jedoch besitzt die zweite Lage 12 dafür eine geringere Wärmeleitfähigkeit als die erste Lage 11. Die zweite Lage 12 stellt somit die wesentliche thermische Isolation bereit, so dass die erzeugte Wärme im System bleibt und nicht an die Umgebung abgegeben wird. Ein Beispiel für die zweite Lage 12 ist FL30. Die zweite Lage 12 besitzt eine Temperaturstabilität von bis zu etwa 1600 °C bis zu etwa 1700°C.

Die erste Lage 11 besitzt einen L-förmigen Querschnitt. Sie erstreckt sich mit einem Schenkel nach außen hin über die zweite Lage 12. Sie bildet einen Kragen für die zweite Lage 12. Dadurch steht die zweite Lage 12 nicht in direktem thermischen Kontakt zur beheizten Auskleidung 50.

Der Boden 23 oder das Fundament 23 des Bodens besitzt eine Temperaturstabilität von bis zu etwa 2000°C. Der Boden 23 ist zum Beispiel eine Wand, die aus einem feuerfesten keramischen Material, vorzugsweise basierend auf ZrO₂ und/oder Spinell, aufgebaut ist.

Figuren 4.a bis 4.d zeigen eine schematische Darstellung einer dritten Ausführungsform eines Läutertiegels 3 mit einer dreischichtigen bzw. dreilagigen Wand 10. Zunächst zeigt Figur 4.a den Läutertiegel 3 in einem horizontalen Querschnitt ohne die elektrischen Verbindungsmittel 66 und 68 zu den beiden Heizeinrichtungen 71 und 72, die hier jedoch nicht dargestellt sind.

Der Läutertiegel 3 besitzt einen sogenannten "Top-Zulauf", d.h. einen Zulauf 3a von oben. Die Fließrichtung 1b der Schmelze 1 ist mit den Pfeilen angedeutet. Die Schmelze 1 fließt seitlich, hier von links, über die Oberseite der Seitenwand 10 in den Tiegel 3 hinein und strömt nach dem Passieren der Kante nach unten. Aufgrund der sukzessiven Erwärmung innerhalb des Tiegels 3 durch die beheizte Wand 10 oder Auskleidung 50 steigt die Schmelze 1 wieder nach oben, steigt über die Oberkante der Seitenwand 10 und strömt seitlich, hier rechts, nach außen. Dabei fließt die Schmelze 1 parallel oder entlang der Verbindungslinie der beiden Heizeinrichtungen 71 und 72. In einer Variante der Erfindung kann die Schmelze 1 auch senkrecht oder quer zu dieser Verbindungslinie fließen. Die Verbindungselemente 66 und 68 bzw. die Flansche sind gegenüber der Fließrichtung 1b der Schmelze 1 zum Beispiel um 90° gedreht gegenüber der Fließrichtung 1b der Schmelze 1. In den Figuren 4b und 4c ist angedeutet, dass die Fließrichtung 1b der Schmelze 1 sowohl aus der Bildebene heraus als auch in der Bildebene liegen kann.

Der links dargestellte Kragen 51 definiert den Zulauf 3a für die Glasschmelze 1. Der rechts dargestellte Kragen 51 definiert den Ablauf 3b für die Glasschmelze 1. Da die Auskleidung 50 vollständig "bestromt" bzw. konduktiv beheizt ist, wird die Schmelze 1 nicht nur im Innenraum des Tiegels 3 sondern bereits auf dem links dargestellten Kragen 51 und auch noch auf dem rechts dargestellten Kragen 51 erwärmt.

Der Innenraum bzw. das Innenvolumen des Läutertiegels 3 definiert den Raum zum Läutern, der durch eine Grundfläche 33, eine Deckfläche 31 und eine Mantelfläche 32 gebildet wird. Das Volumen zum Läutern muss sich hierbei nicht auf das beschriebene Volumen beschränken sondern kann auch das Volumen oberhalb des Kragens 51 umfassen. Die Mantelfläche 32 wird durch die Seitenwand 10 oder die Innenseite 10b der Seitenwand 10 oder durch die Auskleidung 50 der Seitenwände 10 begrenzt oder gebildet. Die Grundfläche 33 wird durch den Boden oder den Boden 53 der Auskleidung 50 begrenzt oder definiert. Die Deckfläche 31 wird zum Beispiel durch die obere Öffnung des Tiegels 3 gebildet.

Der Aufbau der Wand 10 ist vergleichbar mit dem in Figur 3.b gezeigten Aufbau. Als ein erster Unterschied ist noch zwischen der ersten Lage 11, welche dem Tiegel 3 seine wesentliche mechanische Stabilität gibt, noch eine weitere dritte Lage 13 angeordnet. Die dritte Lage 13 ist allgemein ein thermisch, vorzugsweise bis etwa 2100°C, stabiles Textilerzeugnis. Filz ist ein Beispiel für ein Textil. Ein Beispiel für das Material ist Zr0₂. In einer bevorzugten Ausführungsform ist die dritte Lage 13 ein Zr0₂-Filz. Die dritte Lage 13 bewirkt einen mechanischen Schutz der ersten Lage 11 vor der Auskleidung 50, zum Beispiel beim deren Einbau. Zudem kann die Auskleidung 50 beim thermisch bedingten Ausdehnen oder Schrumpfen auf der dritten Lage 13 gleiten. Ferner dient die dritte Lage 13 als eine Art Fänger für von der Auskleidung abgedampfte Teilchen. Die dritte Lage 13 bedeckt die Oberseite 10a und die Innenseite 10b der Seitenwand 10. Sie bildet eine Art zweite Auskleidung.

Die Schmelze 1 wird beheizt, indem die Seitenwand 52 der Auskleidung 50 zumindest abschnittsweise konduktiv durch einen elektrischen Stromfluss beheizt wird. In dem Beispiel wird die Auskleidung 50 vollständig konduktiv beheizt. Denn die Einspeisung des Stroms erfolgt an der oberen äußeren Kante der Auskleidung 50 und an der unteren inneren Kante, an der die Seitenwand 52 in den Boden 53 übergeht.

Der Stromfluss wird durch die anlegten Spannungen U1 und U2 und eine in der Auskleidung erzeugte Potentialdifferenz generiert, wenn U1 ≠ U2. Die Richtung des Stromflusses in der Auskleidung 50 ist mit Pfeilen für U1 > U2 angedeutet (siehe dazu Figur 4.b).

In dem dargestellten Beispiel wird in der Seitenwand 52 der Auskleidung 50, eine elektrische Potentialdifferenz derart bereitgestellt, dass die Richtung des Stromflusses in der Seitenwand 52 von der Deckfläche 31 zur Grundfläche 33 bzw. von der Oberseite 3c zur Unterseite 3d verläuft. Da auch der Kragen 51 der Auskleidung 50 beheizt wird, ist die Richtung des Stromflusses von der Außenseite des Kragens 51 nach innen zur Seitenwand 52 und in der Seitenwand 52 von der Deckfläche 31 zur Grundfläche 33. Der Boden 52 ist bzw. wird im Allgemeinen oder zumindest bei zwei Heizeinrichtungen 71 und 72 nicht konduktiv beheizt, da dieser auf einem einheitlichen Potential liegt und somit kein Strom fließt. Der Stromfluss verläuft nicht von der linken Kragenseite 51 zur rechten Kragenseite 51 bzw. verläuft nicht vom Zulauf 3a in Richtung zum Ablauf 3b oder umgekehrt.

Die Beheizung erfolgt in der Ausführungsform mittels zwei Heizeinrichtungen 71 und 72. Die Einspeisung ist keine Punkteinspeisung sondern vielmehr eine Flächeneinspeisung. Dazu sei auf die Figuren 4.b bis 4.d verwiesen.

Die Auskleidung 50 kann einteilig ausgeführt sein. Dies bietet den Vorteil, dass keine oder nur wenige Kanten abgedichtet werden müssen. In dem Beispiel ist die Auskleidung 50 jedoch zweiteilig ausgebildet. Die Seitenwände 52 und der Kragen 51 der Auskleidung 50 werden durch ein erstes, vorzugsweise einstückiges, Bauteil gebildet. Der Boden 53 der Auskleidung 50 wird durch ein zweites Bauteil gebildet. Die Unterseite der Seitenwand 52 sitzt auf der Oberseite des Bodens 53 auf. Vorzugsweise sind die Seitenwand 52 und der Boden 53 miteinander verschweißt.

In einer bevorzugten Ausführungsform ist die Fläche des Bauteils, welches den Boden 53 der Auskleidung 50 bereitstellt, größer als die Grundfläche 33 des Bereichs zum Läutern 3 (siehe dazu Figur 4.d). Zur besseren Veranschaulichung kann das verglichen werden mit einer Tasse, die auf einem Untersetzer aufsitzt. Der Untersetzer besitzt im Allgemeinen eine größere Fläche oder einen größeren Durchmesser als der Boden der Tasse. Dadurch wird eine Art Fortsatz oder Kragen gebildet. Dies bietet den Vorteil, dass dieser Kragen und somit der Boden 53 recht einfach kontaktiert werden kann. Dieser Bereich ist bevorzugt dicker als die Grundfläche 33 auszuführen, damit die joulsche Erwärmung hier gering gehalten werden kann.

Der Boden 53 der Auskleidung 50 ist über ein unteres Anschlusselement 65 kontaktiert (siehe auch Figur 4.d). Dieses kontaktiert die unteren Anschlüsse 61 und 62 (siehe dazu die Figuren 6.a bis 6.g). Das untere Anschlusselement 65 ist dem Boden 53 zugeordnet. Das untere Anschlusselement 65 ist vorzugsweise ein als Ring, vorzugsweise Kreisring, ausgebildeter Flansch 65. Der Ring 65 kann, wie gezeigt, an der Außenkante des Bodens 53 anliegen. Es kann aber auch ein Dehnungselement 64 als Zwischenstück vorgesehen sein, um thermische Längenveränderungen kompensieren zu können (siehe dazu das Dehnungsblech 64 in den Figuren 3.a und 3.b) Vorzugsweise ist der Ring 65 mit dem Boden 53 verschweißt. Der Ring 65 erstreckt sich bevorzugt vollständig über den Umfang des Bodens 53. Der Ring 65 ist ein Metall, zum Beispiel ein Nickel-Flansch 65. Der Ring 165 erstreckt sich durch die Seitenwand 10 oder unter der Seitenwand 10 entlang nach außen. Das Anschlusselement 65 stellt eine der beiden elektrischen Verbindungen zwischen der Auskleidung 50 und den beiden Heizeinrichtungen 71 und 72, insbesondere mittels des unteren Verbindungsmittels 66, bereit (siehe dazu Figur 4.d).

Der Kragen 51 der Auskleidung 50 ist über ein oberes Anschlusselement 67 kontaktiert (siehe auch Figur 4.c). Das obere Anschlusselement 67 ist hier der Seitenwand 52 und dem Kragen 51 zugeordnet. Dieses kontaktiert den oberen Teil der Auskleidung 50. Das obere Anschlusselement 67 liegt an der Außenseite 10c der Seitenwand 10 an. Es ist ein Mantel, zum Beispiel ein Zylindermantel, der sich bevorzugt vollständig über den Umfang des Tiegels 3 oder der Außenseite 10c seiner Seitenwand 10 erstreckt. Der Mantel 67 ist ein Metall, zum Beispiel ein Nickel-Flansch 67. Das obere Anschlusselement 67 stellt die andere der beiden elektrischen Verbindungen zwischen der Auskleidung 50 und den Heizeinrichtungen 71 und 72, insbesondere mittels der oberen Verbindungsmittel 68, bereit.

Figur 4.b entspricht der Figur 4.a. Als Ergänzung sind die Verbindungsmittel 66 und 68 zu den Heizeinrichtungen 71 und 72 eingezeichnet. Figur 4.c zeigt eine Aufsicht auf die Anlage aus Figur 4.b. Figur 4.d zeigt einen Querschnitt der Anlage aus Figur 4.b entlang der Schnittlinie A-A.

Die Verbindungsmittel 66 und 68 stellen die elektrische Verbindung der Auskleidung 50 mit den Heizeinrichtungen 71 und 72 her. Die Verbindungsmittel 66 und 68 sind als Platten ausgebildet, die mit den Flanschen 65 bzw. 67 in elektrischem Kontakt stehen, vorzugsweise aneinander stoßen. Die Verbindungsmittel 66 und 68 und die Flansche 65 bzw. 67 können auch einteilig oder einstückig ausgebildet sein.

Die Verbindungsmittel 66 und 68 erstrecken sich radial nach außen. Sie erstrecken sich, wie in den Figuren 4.c und 4.d dargestellt, vollständig über den Umfang des Läutertiegels 3. Dies resultiert in einer gleichmäßigeren Stromverteilung und somit einer gleichmäßigeren Erwärmung der Auskleidung 50.

Beispielhaft werden hier zwei Heizeinrichtungen 71 und 72 eingesetzt. Die durch die beiden Heizeinrichtungen 71 und 72 erzeugten Ströme werden gegenüberliegend und somit in einem Winkel von etwa 180° zueinander der Auskleidung 50 zugeführt. Der Idealfall der Beheizung stellt eine über den Umfang der Auskleidung 50 gleichmäßige Stromeinspeisung dar. Ein Beispiel stellt eine rotationssymmetrische Einspeisung dar. Um diesen Idealfall annähern zu können, kann bzw. können eine Vielzahl von Heizeinrichtungen 71 und 72 und/oder ein Vielzahl von Einspeisungsbereichen eingesetzt werden. Vorzugsweise wird bzw. werden die Vielzahl der Heizeinrichtungen 71 und 72 und/oder die Vielzahl der Einspeisungsbereiche in einem annähernd gleichen Winkelabstand zueinander angeordnet. Wie bereits gezeigt, zum Beispiel zwei Anschlüsse in einem Abstand von 180°, drei Anschlüsse in einem Winkel von 120°, vier Anschlüsse in einem Winkel von 90°, ... zueinander.

Das untere Anschlusselement 65 und das zugeordnete untere Verbindungsmittel 66 sowie das obere Anschlusselement 67 und das zugeordnete obere Verbindungsmittel 68 bilden gemeinsam die Zuleitungen für die Auskleidung 50 und somit zur Beheizung der Auskleidung 50. Hierbei sind dem unteren Anschluss 62 und/oder 63 das untere Anschlusselement 65 und das untere Verbindungsmittel 66 zugeordnet. Dem oberen Anschluss 60 und/oder 61 sind das obere Anschlusselement 67 und das obere Verbindungsmittel 68 zugeordnet. Vorzugsweise besitzen die Zuleitungen 65 bis 68 für die Auskleidung 50 einen größeren Querschnitt als die Auskleidung 50. Dadurch ist die Stromdichte in den Zuleitungen 65 bis 68 verringert. Somit wird die Wärme nicht in der Zuleitung 65 bis 68 sondern in der Auskleidung 50 erzeugt, so dass eine unerwünschte Wärmeabgabe, zum Beispiel an die Umgebung verringert ist.

In einer Ausführungsform werden die Zuleitungen 65 bis 68 für die Auskleidung 50 zumindest abschnittsweise gekühlt. Dadurch kann ein unerwünschter Wärmeverlust, insbesondere an die Umgebung, durch einen verringerten Widerstand der Zuleitungen 65 bis 68 vermindert werden. Beispielsweise ist der Bereich, wo die Stoßkante Seitenwand-Boden liegt mit einer Kühleinrichtung ausgestattet. Dadurch kann in diesen Bereich eingetretene Schmelze ausfrieren und eine Dichtung bereitstellen (siehe dazu zum Beispiel die Kühleinrichtung 81 in der Nähe des Dehnungselements 64 in den Figuren 3.a und 3.b).

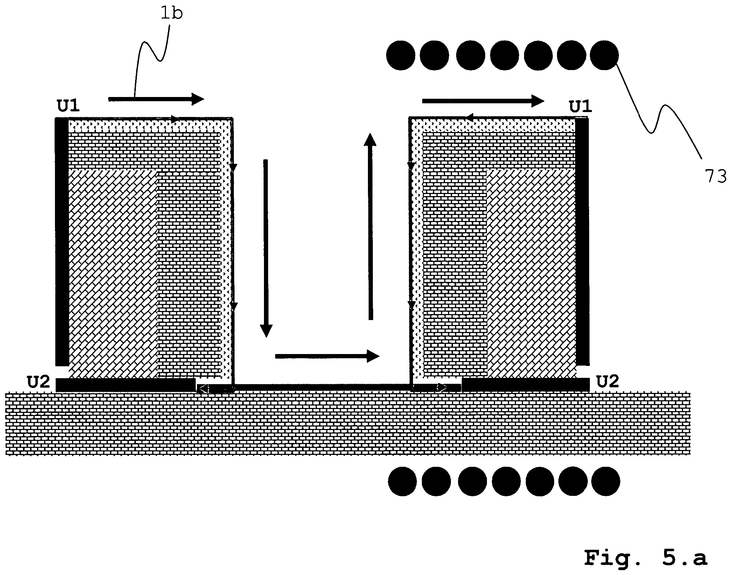

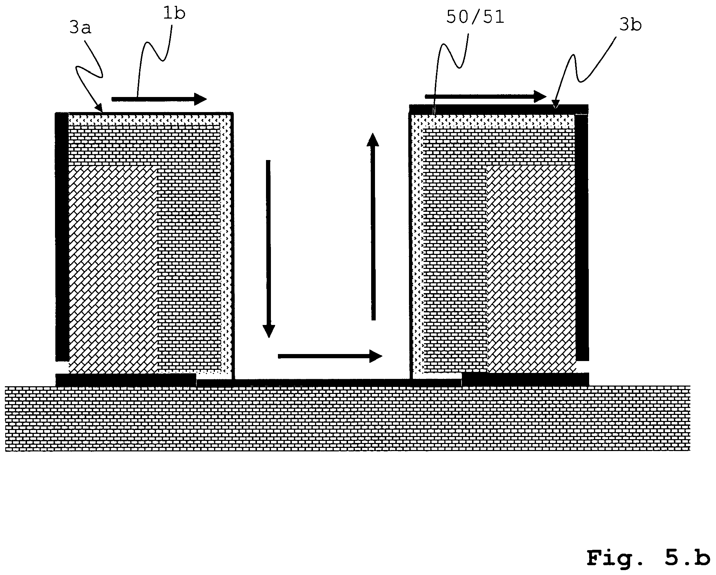

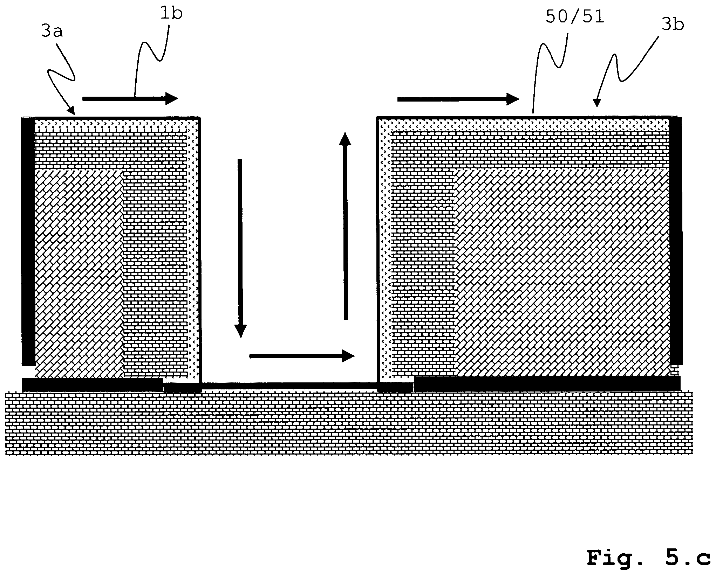

In den Figuren 5.a bis 5.c sind Weiterbildungen des in Figur 4.a präsentierten Läutertiegels 3 dargestellt.

Zunächst zeigt Figur 5.a eine Ausführungsform, in der die Auskleidung 50 nicht alleine konduktiv beheizt wird. Die Auskleidung 50 wird in einem Abschnitt zusätzlich noch induktiv beheizt. Beispielhaft wird der Kragen 51 noch zusätzlich induktiv erwärmt. Vorzugsweise wird der Kragen 51, welcher den Ablauf 3b für die Schmelze 1 bildet, noch zusätzlich erwärmt. Dazu sind Spulen 73 im Bereich des Ablaufs 3b angeordnet. Dadurch kann die Temperatur der Schmelze 1 am Ende der Läuterung erhöht und somit die Läuterung der Schmelze 1 bei Bedarf unterstützt werden. Induktorgeometrie und Schwingkreisfrequenz sind an die entsprechende Geometrie des Läutertiegels 3 angepasst.

Figur 5.b zeigt eine Ausführungsform, in der die Dicke der Auskleidung 50, insbesondere abschnittsweise, gezielt variiert ist bzw. wird, um das zu erzeugende Temperaturprofil in der Auskleidung 50 und damit auch in der Schmelze 1 zu beeinflussen. Als ein Beispiel ist die Dicke der Auskleidung 50, die den Kragen 51 und hier den Ablauf 3b für die Schmelze 1 bildet, größer gewählt als die Dicke der Auskleidung 50 und 52 an der Seitenwand 10. Dies resultiert in eine geringere Stromdichte und somit in eine geringere Temperatur am Ablauf 3b. Dadurch kann zum Beispiel ein zu starkes Erhitzen und ein damit verbundenes "Abdampfen" von Schmelzbestandteilen reduziert oder verhindert werden.

Figur 5.c zeigt eine Ausführungsform des Läutertiegels 3, der im Bereich des Ablaufs 3b eine gegenüber dem Zulauf 3a der Schmelze 1 vergrößerte Länge des Kragens 51 besitzt. Dadurch kann sich die erwärmte Schmelze 1 auf einer verlängerten Strecke, in welcher der Schmelzstand gering ist und somit die Blasen eine geringere Zeit zum Austreten besitzen, bewegen. Dadurch kann die Läuterung verbessert werden. Zugleich kann die Schmelze 1 abkühlen, so dass beim ff-Kontakt hinter der Vorrichtung 3 keine bzw. nur geringe, unkritische Korrosion zu erwarten ist. Der Ablauf 3b oder der Kragen 51 im Ablauf 3b ist derart, insbesondere in der Länge, gewählt oder dimensioniert, so dass die Schmelze 1 auf eine Temperatur kühlbar ist, welche das Material, zum Beispiel ein Feuerfestmaterial, einer der Läutervorrichtung 3 nachfolgenden Einrichtung nicht wesentlich nachteilig beeinflusst oder zerstört.

Ein Aspekt der Erfindung basiert darauf, dass zumindest die Seitenwand 10 des Läutertiegels 3, vorzugsweise die Seitenwand 53 der Auskleidung 50, vorzugsweise zumindest, abschnittsweise oder vollständig konduktiv beheizt wird. Die konduktive Beheizung erfolgt derart, dass in der Seitenwand 10 des Läutertiegels 3, vorzugsweise in der Seitenwand 53 der Auskleidung 50, eine Potentialdifferenz bereitgestellt wird, so dass die Richtung des Stromflusses in der Seitenwand 10 oder 53 von der Deckfläche 31 zur Grundfläche 33 oder von der Grundfläche 33 zur Deckfläche 31 verläuft. Der Stromfluss in der Auskleidung 50 oder in der Seitenwand 52 der Auskleidung 50 verläuft von der Oberseite 3c zur Unterseite 3d oder von der Unterseite 3d zur Oberseite 3c des Läutertiegels 3.

Dazu zeigen die Figuren 6.a bis 6.h einen Läutertiegel 3, genauer gesagt die Auskleidung 50 eines Läutertiegels 3, in einem vereinfachten Querschnitt mit unterschiedlichen Anordnungen der Kontakte zum Einspeisen des Stroms bzw. zum Anlegen der Potentiale. Die Anschlüsse 60 bis 63 sind hier zu Zwecken eines besseren Verständnisses eingeführt. Sie geben die Bereiche an, in denen der Strom in die Auskleidung 50 eingespeist werden soll. Diese sind an unterschiedlichen Bereichen der Auskleidung 50 angeordnet. Die Potentiale sind wiederum als U1 und U2 bezeichnet. U1 besitzt beispielhaft einen positiven Wert mit U1 > 0 V. Dagegen liegt U2 beispielhaft auf dem Erdpotential mit U2 = 0V. Die dargestellten Pfeile illustrieren die Richtung des Stromflusses.

Figur 6.a zeigt eine Kontaktierung oder Einspeisung, wie sie bereits in Figur 4.a gezeigt ist. Die Einspeisung ist hier für zwei Heizeinrichtungen 71 und 72 ausgelegt. Es werden zwei obere Anschlüsse 60 und 61 und zwei untere Anschlüsse 62 und 63 bereitgestellt. Die beiden unteren Anschlüsse 62 und 63 befinden sich in der inneren unteren Kante des Läutertiegels 3, wo die Seitenwand 52 in den Boden 53 der Auskleidung 50 übergeht. Da die Auskleidung 50, die den Boden 53 bildet, auf dem gleichen Potential U2 liegt, wird der Boden 53 nicht konduktiv beheizt. Die beiden oberen Anschlüsse 60 und 61 befinden jeweils an der äußeren oberen Kante der Auskleidung 50, welche den Kragen 51 bildet.

In den nachfolgenden Figuren wird auf eine Darstellung der Bezugszeichen 60 bis 63 für die zwei oberen und die zwei unteren Anschlüsse und der Bezugszeichen 51 bis 53 für die Bereiche der Auskleidung 50 sowie der Bezugszeichen 3c und 3d für die Oberseite und Unterseite verzichtet.

Figur 6.b zeigt eine Einspeisung, wie sie bereits in Figur 5.c gezeigt ist. Der Ablauf 3b ist gegenüber dem Zulauf 3a für die Schmelze 1 vergrößert. Zusätzlich zeigt der Kragen 51 an der Außenseite 11c der Seitenwand 10 nach unten. Dies ist bereits in den Figuren 3.a bis 3.b gezeigt. Somit sind die Anschlüsse 60 und 61 an der Außenseite 10c angeordnet. Ansonsten sind die Anschlüsse 62 und 63 identisch zu den in Figur 6.a gezeigten Anschlüssen 62 und 63. Zur Vermeidung von Wiederholungen wird auf die vorstehenden Ausführungen verwiesen.

Figur 6.c zeigt eine Einspeisung, bei der nur eine einzelne Heizeinrichtung 71 vorgesehen ist. Eine solche Einspeisung ist zwar vollständig asymmetrisch, trotzdem kann diese Art der Einspeisung ausreichend zum Läutern sein. Denn eine lokale Erwärmung in der kürzesten Strecke zwischen U1 und U2 führt auf dieser kürzesten Strecke zu einem erhöhten Widerstand, so dass der Strom sich aufgrund des geringeren Widerstandes in der weniger erwärmten Bereichen nach und nach über den Umfang "ausweiten" oder "ausweichen" wird. Dies ist mit dem gestrichelten Pfeil angedeutet. Aufgrund dieser einseitigen Anordnung der Heizeinrichtung 71 kann in dieser Variante der Erfindung auch ein Strom in dem Boden 52 fließen.

Figur 6.d zeigt eine Einspeisung, bei welcher zum einen die oberen Anschlüsse 60 und 61 nicht an der Außenkante des Kragens 51 angeordnet sind sondern beispielsweise in der Mitte des Kragens 51. Auch die unteren Anschlüsse 62 und 63 befinden nun nicht mehr in der Ecke. Sie befinden sich im Boden 53 selbst. In dieser Ausgestaltung ist auch der Boden 53 abschnittsweise stromdurchflossen. Dieser wird teilweise zusammen mit den Seitenwänden 52 erwärmt.

Die Seitenwände 52 der Auskleidung 50 der in den Figuren 6.a bis 6.d gezeigten Ausführungsformen sind senkrecht zum Boden 53 oder vertikal angeordnet. Dagegen illustrieren die Figuren 6.e bis 6.h Ausführungsformen, in welchen die Seitenwände 52 geneigt sind zu der Senkrechten oder der Vertikalen. Das ergibt den Querschnitt eines Trapezes. Eine solche Schrägstellung vermindert das Anhaften von Blasen an der Seitenwand 52. Denn die Blasen, welche sich in einem Wechselwirkungsbereich mit der Seitenwand 52 befinden, steigen im Allgemeinen senkrecht nach oben und nicht entlang der geneigten Seitenwand 52. Vorzugsweise liegt der Winkel, den die Seitenwand 52 mit der Senkrechten oder der Vertikalen einschließt, in einem Bereich von 1° bis 15°. Die Blasen können in der Schmelze 1 enthalten sein und/oder durch das Läutern entstehen.

Das Anhaften von Blasen kann auch reduziert werden, indem der Strom von einer Heizeinrichtung 71 und/oder 72 in die Auskleidung 50 mit einer Frequenz (Netzfrequenz) von 10 bis 100 Hz eingespeist wird. In einer vereinfachten Ausführungsform der Erfindung wird eine landestypische Netzfrequenz eingespeist. Diese liegt zum Beispiel in Europa bei etwa 50 Hz und in den USA bei etwa 60 Hz. Dies resultiert in eine Vibration der Vorrichtung 3. Durch die hohen Stromdichten erfolgt ein "Abschütteln" der Blasen von der Auskleidung 50. Durch die Verwendung höherer Frequenzen, zum Beispiel bis zu etwa 10 kHz, kann die Bildung von Blasen zumindest reduziert oder vermieden werden. Dazu kann die Heizeinrichtung 71 und/oder 72 einen Umrichter umfassen.

Figur 6.e zeigt eine Einspeisung, welche im Wesentlichen analog zu der in Figur 6.a gezeigten Einspeisung ist. Zur Vermeidung von Wiederholungen wird auf die vorstehenden Ausführungen zu Figur 6.a verwiesen. Die Auskleidung 50 ist hier jedoch 2-teilig aufgebaut. Sie ist aufgebaut aus der Seitenwand 52 als ein erster Teil der Auskleidung 50 und dem Boden 53 als ein zweiter Teil der Auskleidung 50. Der Boden 53 erstreckt sich über die Stoßkante zur Seitenwand 52 hinaus. Der Boden 53 steht an der Seite sozusagen über. Es wird eine Art Fortsatz oder Kragen gebildet. Die beiden unteren Anschlüsse 62 und 63 liegen an diesem Fortsatz an. Diese Ausgestaltung ermöglicht ein einfaches Verbinden mit dem hier nicht dargestellten unteren Anschlusselement 65 (siehe dazu Figur 4.d).

Figur 6.f zeigt eine Einspeisung, die im Wesentlichen der in Figur 6.b gezeigten Einspeisung entspricht. Neben der Neigung der Wände 52 besitzt diese Ausgestaltung den weiteren Unterschied, dass sie im Zulauf 3a keinen Kragen besitzt.

Figur 6.g zeigt eine Einspeisung in einem Läutertiegel 3 mit einem Zulauf 3a in der Grundfläche 33. Beispielhaft wurden die Polaritäten der Einspeisung und somit auch die Richtung des fließenden Stroms in der Auskleidung 50 umgekehrt.

Weiterhin zeigt Figur 6.h eine Einspeisung, in der die Anschlüsse 60 bis 63 auf der Seitenwand 52 so angeordnet sind, dass sie nicht auf der Kante bzw. nicht in der Ecke liegen sondern in einem Bereich dazwischen. Die oberen und Anschlüsse 60 und 61 und die unteren Anschlüsse 62 und 63 liegen auf der Seitenwand 52. Die Seitenwand 52 wird somit nur abschnittsweise konduktiv beheizt.

Figur 6.i zeigt eine Ausführungsform, bei welcher der Boden nicht mehr gerade sondern gekrümmt ausgebildet ist. Auch in dieser Ausführungsform kann dem Volumen zum Läutern eine Grundfläche 33 zugeordnet werden, welche in diesem Fall gekrümmt ist.

Figur 6.j zeigt dagegen eine Ausführungsform, die einen im Wesentlichen dreieckigen Querschnitt hat. Die Grundfläche 33 wird hierbei durch den unteren Punkt des Dreiecks gebildet. Zudem fallen die unteren Anschlusse 62 und 63 in einem Punkt bzw. in einem kleinen Bereich zusammen.

Figur 6.k zeigt eine Ausführungsform mit einer vollständig gekrümmten Ausgestaltung. Als Weiterbildung zeigt Figur 6.i eine Weiterbildung, welche vorliegend durch zwei gekrümmte Flächen gebildet wird.

Die Figuren 6.m und 6.n zeigen eine Ausführungsform, in der der Strom abschnittsweise senkrecht oder sogar entgegen der eigentlichen Stromrichtung verläuft. Entscheidend ist dabei die Tatsache, dass der Strom in einer Art Gesamtbetrachtung noch immer von unten nach oben verläuft.

Abschließend zeigt Figur 6.o eine Ausgestaltung, in der die Auskleidung 50 an der Außenseite soweit nach unten gezogen ist, dass die oberen Anschlüsse 60 und 61 räumlich gesehen unterhalb der unteren Anschlüsse 62 und 63 liegen. Jedoch ist entscheidend, dass der Auskleidung 50 der Strom immer noch derart geführt wird, dass die Richtung des Stromes in der Auskleidung 52 der Seitenwand 10 von oben nach unten verläuft.

In allen gezeigten Ausführungsformen ist die elektrische Potentialdifferenz derart in der Seitenwand 52 gewählt, so dass die Richtung des Stromflusses in der Seitenwand 52 von der Deckfläche 31 zur Grundfläche 33 (Figuren 6.a bis 6.f und 6.h bis 6.o) oder umgekehrt von der Grundfläche 33 zur Deckfläche 31 verläuft (Figur 6.g). Der Stromfluss ist von oben nach unten oder umgekehrt. Es ist damit ersichtlich, dass der Stromfluss nicht derart ist, dass die Richtung des Stromflusses in der Seitenwand 52, die in Kontakt mir de Schmelze 1 steht, umgekehrt oder vollständig umgekehrt wird, wie zum Beispiel dass der Stromfluss in einer Seitenwand 52 von der Deckfläche 31 zur Grundfläche 33 und in einer gegenüberliegenden Seitenwand 52 von der Grundfläche 33 zur Deckfläche 31 verläuft.

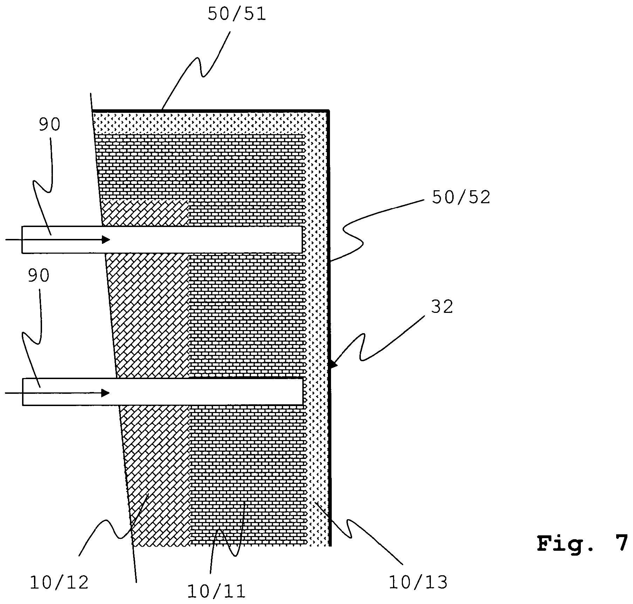

Die Figur 7 zeigt eine schematische Detailansicht des Ausschnitts Z1 aus Figur 4.a. In der Seitenwand 53 sind Gaszuführungen 90 angeordnet bzw. eingebracht. Somit ist an der Rückseite oder an der schmelzabgewandten Seite der Verkleidung 50 oder 53 eine definierte Atmosphäre anlegbar.

Vorzugsweise wird eine Atmosphäre eines nicht oxidierenden Fluids angelegt. Vorzugsweise wird das Fluid als ein Gas bereitgestellt. Das Gas ist zumindest ein Gas, welches ausgewählt ist aus einer Gruppe bestehend aus Stickstoff, ein Edelgas, und Wasserstoff. Dies ermöglicht einen effektiven Oxidationsschutz für die Auskleidung 50 oder 53, insbesondere für eine Auskleidung 50 oder 53 aus Iridium, da Iridium bei hohen Temperaturen nicht oxidationsstabil ist, insbesondere gegenüber dem in der Umgebung vorhandenen Sauerstoff. Ein im Allgemeinen nur aufwendig zu realisierender vollständig gasdichter Aufbau ist nicht erforderlich. Vorzugsweise ist die definierte Atmosphäre kein fließendes System sondern vielmehr ein im Wesentlichen statisches System ohne einen permanenten Fluidaustausch. Dadurch kann ein Verdampfen der metallischen Auskleidung 50 bei hohen Temperaturen reduziert werden. Denn es stellt sich ein thermodynamischer Gleichgewichtszustand zwischen der festen und der gasförmigen oder flüssigen Phase ein.

Die Figuren 8.a und 8.b illustrieren eine Detailansicht des Ausschnitts Z2 aus Figur 4.a mit einer ersten und einer zweiten beispielhaften Ausgestaltung des Übergangsbereichs, in dem zum einen die Auskleidung 50 oder 51 kontaktiert wird und in dem der Übergang zu benachbarten Einrichtungen 4 oder zum Oberofen 140 stattfindet. Der Übergangsbereich ist als ein sogenannter Verglasungskragen 80 ausgebildet.

Figur 8.a zeigt die erste erfindungsgemäße Ausgestaltung des Verglasungskragens 80. Der Kragen 51 der Auskleidung 50 erstreckt sich über die Außenkante der Seitenwand 10, "knickt" nach unten ab und liegt an dem Anschlusselement 67 bzw. dem Flansch zur Beheizung der Auskleidung 50 an.

Dadurch wird die elektrische Verbindung bereitgestellt. Vorzugsweise liegt die Auskleidung 50 oder das Ende der Auskleidung 51 federnd an dem Anschlusselement 67 an, so dass thermische Längenausdehnungen ausgeglichen werden können. Vorzugsweise ist die Endkante der Auskleidung 50 dazu "geknickt". Zwischen der Auskleidung 50, dem Kopfende des Anschlusselements 67 und einem Feuerfestmaterial 42, das zum Beispiel durch ein Pt-Blech 44 bedeckt ist, ist ein Zwischenraum gebildet, der mit der Schmelze 1 füllbar ist. Das Anschlusselement 67 besitzt eine L-Form. Unterhalb der Oberseite des einen Schenkels ist eine Kühleinrichtung 81, zum Beispiel ein mit Wasser durchflossenes Rohr angeordnet. Dadurch kann die in den Zwischenraum fließende Schmelze 1 ausfrieren, einen Schutzmantel aus arteigenem Material bilden und den Übergangsbereich vorzugsweise gasdicht verschließen.

Figur 8.b zeigt die zweite erfindungsgemäße Ausgestaltung des Verglasungskragens 80. Der Bereich der Auskleidung 50 bzw. des Kragens 51, welcher sich über die Außenseite der Seitenwand 10 erstreckt, ist vergleichbar mit dem in Figur 8.a beschriebenen Bereich. Um Wiederholungen zu vermeiden, wird daher auf die vorstehenden Ausführungen zu Figur 8.a verwiesen. Nun erstreckt sich das Anschlusselement 67 über das Ende bzw. die Kante der Auskleidung 50 hinaus nach oben. Das Anschlusselement 67 besitzt eine Art Ansatz oder Verlängerung, welcher bzw. welche auf der L-Form aufsitzt. Vorzugsweise erstreckt die Verlängerung sich bis zur Oberkante der Seitenwand 10. Somit wird zwischen der Auskleidung 50 und dem Anschlusselement 67 ein Zwischenraum gebildet, der mit der Schmelze 1 füllbar ist. In oder an der Verlängerung des Anschlusselements 67 ist ein Kühlsystem oder Kühleinrichtung 81 angeordnet. Ein mit Wasser durchflossenen Rohrsystem 81 ist wiederum eine mögliche Ausgestaltung der Kühleinrichtung 81. Dadurch kann die in dem Zwischenraum fließende Schmelze 1 ausfrieren, einen Schutzmantel aus arteigenem Material bilden und den Übergangsbereich vorzugsweise gasdicht verschließen.

Die Erfindung hat zum Beispiel den Vorteil eines um 60 bis 80% geringeren Energiebedarfs gegenüber der im Stand der Technik (siehe dazu die DE 10 2006 003 521 A1) angeführten Vorrichtung. Zudem ist kein zusätzlicher, ausfallsicherer Kühlturm erforderlich. Schließlich ist die Technologie unabhängig von der elektrischen Leitfähigkeit der Gläser einsetzbar. Dies bietet eine hohe Flexibilität. Es ist zum Beispiel kein Umbau von Borosilkatglas auf Glaskeramik bzw. auf alkalifreie Gläser notwendig.

Es ist dem Fachmann ersichtlich, dass die beschriebenen Ausführungsformen beispielhaft zu verstehen sind. Die Erfindung ist nicht auf diese beschränkt sondern kann in vielfältiger Weise variiert werden, ohne den Geist der Erfindung zu verlassen.

Merkmale einzelner Ausführungsformen und die im allgemeinen Teil der Beschreibung genannten Merkmale können jeweils untereinander als auch miteinander kombiniert werden.

### Bezugszeichenliste

- 1: Schmelze oder Glasschmelze
- 1a: Schmelzoberfläche oder freie Schmelzoberfläche
- 1b: Fließrichtung der Schmelze
- 2: Schmelzwanne oder Schmelzaggregat
- 3: Läutertiegel oder Bereich zum Läutern
- 3a: Zulauf des Läutertiegels
- 3b: Ablauf des Läutertiegels
- 3c: Oberseite des Läutertiegels
- 3d: Unterseite des Läutertiegels
- 4: Rinne oder Konditionierungseinrichtung
- 5: Homogenisierungseinrichtung
- 5b: Rühreinrichtung
- 6: Einrichtung zur Formgebung
- 10: Seitenwände oder Mantelfläche
- 10a: Oberseite der Seitenwand
- 10b: Innenseite der Seitenwand
- 10c: Außenseite der Seitenwand
- 11: Erste Lage
- 12: Zweite Lage
- 13: Dritte Lage
- 23: Boden oder Fundament des Läutertiegels
- 24: Kasten oder gasdichter Kasten
- 31: Deckfläche
- 32: Mantelfläche
- 33: Grundfläche
- 40: Oberofen
- 41: Brenner
- 42: Seitenwand des Oberofens
- 43: Decke des Oberofens
- 44: Blech oder Platinblech
- 50: Auskleidung
- 51: Kragen der Auskleidung
- 52: Seitenwand der Auskleidung
- 53: Boden der Auskleidung
- 60: Erster oberer Anschluss
- 61: Zweiter oberer Anschluss
- 62: Erster unterer Anschluss
- 63: Zweiter unterer Anschluss
- 64: Dehnungselement oder Dehnungsblech
- 65: Unteres Anschlusselement, insbesondere für den Boden, oder Flansch oder Nickel-Flansch
- 66: Unteres Verbindungsmittel zwischen dem unteren Anschlusselement und einer Heizeinrichtung
- 67: Oberes Anschlusselement für die Seitenwand und/oder den Kragen oder Flansch oder Nickel-Flansch
- 68: Oberes Verbindungsmittel zwischen dem oberen Anschlusselement und einer Heizeinrichtung
- 69: Isolation zwischen den beiden Verbindungsmitteln
- 71: Erste Heizeinrichtung oder erster Transformator
- 72: Zweite Heizeinrichtung oder zweiter Transformator
- 73: Induktionsspule
- 80: Verglasungskragen
- 81: Kühleinrichtung oder fluiddurchflossenes Rohr oder Rohrsystem
- 90: Gaszufuhr

## Patentansprüche

1. Vorrichtung zum, insbesondere kontinuierlichen, Läutern einer anorganischen nichtmetallischen Schmelze, vorzugsweise einer Glasschmelze, umfassend
- einen Läutertiegel (3) mit einer Oberseite (3c) und einer Unterseite (3d), der zumindest durch Seitenwände (10), die an einer Innenseite (10b) eine metallische Auskleidung (50, 52) als Schmelzkontaktfläche aufweisen, gebildet ist, wobei die Seitenwände zumindest eine, vorzugsweise an die Auskleidung (50, 52) grenzende, erste Lage (11) und eine zweite Lage (12) aufweisen, wobei die erste Lage (11) eine gegenüber der zweiten Lage (12) erhöhte Temperaturstabilität besitzt und die zweite Lage (12) eine gegenüber der ersten Lage (11) geringere Wärmeleitfähigkeit besitzt, und wobei die Auskleidung (50, 52) vollständig die Schmelzkontaktfläche des Läutertiegels (3) bereitstellt,
- wenigstens eine Heizeinrichtung (71, 72) zum konduktiven Beheizen der Auskleidung (50, 52) durch einen Stromfluss in der Auskleidung (50, 52), so dass die Schmelze mittels der beheizten Auskleidung (50, 52) beheizbar ist, wobei die Heizeinrichtung (71, 72) und die Auskleidung (50, 52) über Zuleitungen miteinander verbunden sind, wobei
- die Zuleitungen die Auskleidung (50, 52) über zumindest einen oberen Anschluss (60, 61) und zumindest einen unteren Anschluss (62, 63) derart kontaktieren, dass wenigstens in der Auskleidung (50, 52) der Seitenwand (10) zumindest abschnittsweise ein Stromfluss erzeugbar ist, welcher von der Oberseite (3c) zur Unterseite (3d) oder von der Unterseite (3d) zur Oberseite (3c) verläuft.

2. Vorrichtung nach vorstehendem Anspruch, **dadurch**
**gekennzeichnet, dass** die Auskleidung (50) einen Kragen (51) bildet, der eine Oberseite (10a) der Seitenwand (10) zumindest abschnittsweise bedeckt und insbesondere der Kragen (51) konduktiv beheizbar ist.

3. Vorrichtung nach einem der vorstehenden Ansprüche,
**dadurch gekennzeichnet, dass** die Zuleitungen wenigstens ein oberes Anschlusselement (67) und wenigstens ein unteres Anschlusselement (65) zum Kontaktieren der Auskleidung (50, 51, 52, 53) umfassen, wobei
das obere Anschlusselement (67) der Seitenwand (10, 52) und/oder dem Kragen (51) der Auskleidung (50) zugeordnet ist und das untere Anschlusselement (65) der Unterseite (3d) und/oder einem Boden (53) des Läutertiegels (3) zugeordnet ist.

4. Vorrichtung nach einem der vorstehenden Ansprüche,
**dadurch gekennzeichnet, dass** das obere Anschlusselement (67 als ein Mantel ausgebildet ist, der sich zumindest abschnittsweise über den Umfang der Seitenwand (10) erstreckt und vorzugsweise an einer Außenseite (10c) der Seitenwand (10) anliegt.

5. Vorrichtung nach einem der vorstehenden Ansprüche,
**dadurch gekennzeichnet, dass**
das untere Anschlusselement (65) als eine Platte ausgebildet ist, die sich zumindest abschnittsweise über den Umfang der Unterseite (3d) und/oder des Bodens (53) erstreckt und vorzugsweise an einer Außenkante der Unterseite (3d) und/oder des Bodens (53) anliegt und/oder dass das untere Anschlusselement (65) sich durch die Seitenwand (10) oder unter der Seitenwand (10) nach außen erstreckt und insbesondere außerhalb des Läutertiegels (3) kontaktierbar ist.

6. Vorrichtung nach einem der vorstehenden Ansprüche,
**dadurch gekennzeichnet, dass** die Zuleitungen ein oberes Verbindungsmittel (68) und ein unteres Verbindungsmittel (66) zum elektrischen Verbinden der Auskleidung (50, 51, 52, 53), vorzugsweise mittels des oberen und/oder des unteren Anschlusselements (65, 67), mit der Heizeinrichtung (71, 72) umfassen, wobei
das obere Verbindungsmittel (68) sich zumindest abschnittsweise über den Umfang des Läutertiegels (3), vorzugsweise um das obere Anschlusselement (67) herum, erstreckt und dass das untere Verbindungsmittel (66) sich zumindest abschnittsweise über den Umfang des Läutertiegels (3), vorzugsweise um das untere Anschlusselement (65) herum, erstreckt.

7. Vorrichtung nach einem der vorstehenden Ansprüche,
**dadurch gekennzeichnet, dass** die Zuleitungen gegenüber der Auskleidung (50, 51, 52, 53) einen vergrößerten Querschnitt besitzen.

8. Vorrichtung nach einem der vorstehenden Ansprüche,
**gekennzeichnet durch** wenigstens eine Einrichtung zum Kühlen (81), die den Zuleitungen zugeordnet ist, so dass die Zuleitungen zumindest abschnittsweise kühlbar sind.

9. Vorrichtung nach einem der vorstehenden Ansprüche,
**gekennzeichnet durch** Mittel zum induktiven Beheizen (73) der Auskleidung (50, 51), so dass die Schmelze (1) zumindest abschnittsweise vorzugsweise zusätzlich induktiv beheizbar ist.

10. Vorrichtung nach einem der vorstehenden Ansprüche,
**dadurch gekennzeichnet, dass** die Seitenwände (10) geneigt sind gegenüber der Unterseite (3d) und/oder dem Boden (53) des Läutertiegels (3).

11. Vorrichtung nach einem der vorstehenden Ansprüche,
**dadurch gekennzeichnet, dass** die Seitenwände (10) eine dritte Lage (13) aufweisen, die zwischen der ersten Lage (11) und der Auskleidung (50, 51, 52, 53) angeordnet ist und vorzugsweise die dritte Lage (13) ein Textilerzeugnis umfasst.

12. Vorrichtung nach einem der vorstehenden Ansprüche,
**dadurch gekennzeichnet, dass** die erste Lage (11) einen im Wesentlichen L-förmigen Querschnitt aufweist und sich mit einem Schenkel nach außen hin über die zweite Lage (12) erstreckt.

13. Vorrichtung nach einem der vorstehenden Ansprüche,
**gekennzeichnet durch** Gaszuführungen (90), welche durch die Seitenwand (10) verlaufen, so dass an einer von der Schmelze (1) abgewandten Seite der Auskleidung (50, 51, 52, 53) eine definierte Atmosphäre, vorzugsweise eines nichtoxidierenden Fluids, bereitstellbar ist.

14. Verfahren zur, insbesondere kontinuierlichen, Herstellung eines Glases und/oder einer Glaskeramik umfassend
- Einschmelzen eines Gemenges zum Bereitstellen einer Glasschmelze (1),
- Läutern der Glasschmelze (1) durch eine Temperaturerhöhung der Glasschmelze (1) zumindest in einem Volumen, welches wenigstens abschnittsweise an eine Seitenwand (10, 50, 52) angrenzt, wobei die Seitenwände zumindest eine, vorzugsweise an die Auskleidung (50, 52) grenzende, erste Lage (11) und eine zweite Lage (12) aufweisen, wobei die erste Lage (11) eine gegenüber der zweiten Lage (12) erhöhte Temperaturstabilität besitzt und die zweite Lage (12) eine gegenüber der ersten Lage (11) geringere Wärmeleitfähigkeit besitzt, wobei wenigstens die Seitenwand (10, 50, 52) zumindest abschnittsweise konduktiv durch einen elektrischen Stromfluss beheizt wird,
wobei in der Seitenwand (10, 50, 52) eine elektrische Potentialdifferenz derart bereitgestellt wird, dass die Richtung des Stromflusses in der Seitenwand (10, 50, 52) entweder von oben nach unten oder von unten nach oben verläuft,
- Homogenisieren und/oder Konditionieren der geläuterten Glasschmelze (1),
- Formgebung und/oder Abkühlen und/oder Wärmebehandlung der homogenisierten und/oder konditionierten Glasschmelze (1), so dass ein Glas und/oder eine Glaskeramik bereitstellbar ist.

## Claims

1. A device for refining, in particular continuously, an inorganic non-metallic melt, preferably a glass melt, comprising:
- a refining crucible (3) having an upper side (3c) and a lower side (3d), which crucible is defined at least by lateral walls (10) that have a metallic lining (50, 52) as a melt contact surface on an inner surface (10b) thereof, wherein the lateral walls include at least a first layer (11) preferably adjoining the lining (50, 52), and a second layer (12), wherein the first layer (11) exhibits higher temperature stability than the second layer (12), and wherein the second layer (12) exhibits lower thermal conductivity than the first layer (11), and wherein the lining (50, 52) entirely provides the melt contact surface of the crucible;
- at least one heating means (71, 72) for conductively heating the lining (50, 52) by an electric current flow through the lining (50, 52), so that the melt is heatable by the heated lining (50, 52), wherein the heating means (71, 72) and the lining (50, 52) are connected to one another via supply lines; wherein
- the supply lines make contact with the lining (50, 52) via at least one upper connection (60, 61) and at least one lower connection (62, 63) such that an electric current flow can be generated at least in the lining (50, 52) of the lateral wall (10), at least in sections thereof, from the upper side (3c) to the lower side (3d) or from the lower side (3d) to the upper side (3c),

2. The device according to the preceding claim, **characterised in that** the lining (50) defines a collar (51) which covers an upper surface (10a) of the lateral wall (10) at least in sections thereof, and wherein, in particular, the collar (51) is heatable conductively.

3. The device according to any one of the preceding claims, **characterised in that** the supply lines comprise at least one upper connection member (67) and at least one lower connection member (65) for electrically connecting the lining (50, 51, 52, 53); wherein
the upper connection member (67) is associated with the lateral wall (10, 52) and/or the collar (51) of the lining (50), and the lower connection member (65) is associated with the lower side (3d) and/or a bottom (53) of the refining crucible (3).

4. The device according to any one of the preceding claims, **characterised in that** the upper connection member (67) is in the form of a jacket which extends at least in sections around the perimeter of the lateral wall (10) and preferably engages on an outer surface (10c) of the lateral wall (10).

5. The device according to any one of the preceding claims, **characterised in that** the lower connection member (65) is in the form of a plate which extends at least in sections around the perimeter of the lower side (3d) and/or the bottom (53) and preferably engages on an outer edge of the lower side (3d) and/or of the bottom (53); and/or
that the lower connection member (65) extends through the lateral wall (10) or beneath the lateral wall (10) to the outside and in particular is electrically connectable outside the refining crucible (3).

6. The device according to any one of the preceding claims, **characterised in that** the supply lines comprise an upper connecting means (68) and a lower connecting means (66) for electrically connecting the lining (50, 51, 52, 53) to the heating means (71, 72), preferably via the upper and/or lower connection members (65, 67); wherein
the upper connecting means (68) extends at least in sections around the perimeter of the refining crucible (3), preferably around the upper connection member (67), and the lower connecting means (66) extends at least in sections around the perimeter of the refining crucible (3), preferably around the lower connection member (65),

7. The device according to any one of the preceding claims, **characterised in that** the supply lines have an enlarged cross section compared to the lining (50, 51, 52, 53).

8. The device according to any one of the preceding claims, **characterised by** at least one cooling means (81) associated with the supply lines, so that the supply lines can be cooled at least in sections thereof.

9. The device according to any one of the preceding claims, **characterised by** means for inductively heating (73) the lining (50, 51), so that the melt (1) can preferably additionally be heated inductively, at least portions thereof.

10. The device according to any one of the preceding claims, **characterised in that** the lateral walls (10) are inclined relative to the lower side (3d) and/or the bottom (53) of the refining crucible (3).

11. The device according to any one of the preceding claims, **characterised in that** the lateral walls (10) comprise a third layer (13) which is disposed between the first layer (11) and the lining (50, 51, 52, 53), and wherein the third layer (13) preferably comprises a fabric.

12. The device according to any one of the preceding claims, **characterised in that** the first layer (11) has a substantially L-shaped cross section and wherein one leg thereof extends outwards above the second layer (12).

13. The device according to any one of the preceding claims, **characterised by** gas feeding lines (90) running through the lateral wall (10), so that a defined atmosphere of preferably a non-oxidizing fluid is providable on a side of the lining (50, 51, 52, 53) facing away from the melt (1).

14. A method for producing a glass and/or a glass ceramic, in particular continuously, comprising:
- melting a batch to provide a glass melt (1);
- refining the glass melt (1) by increasing the temperature of the glass melt (1) at least in a volume adjacent to a lateral wall (10, 50, 52), at least in portions thereof, wherein the lateral walls include at least a first layer (11) preferably adjoining the lining (50, 52), and a second layer (12), wherein the first layer (11) exhibits higher temperature stability than the second layer (12), and wherein the second layer (12) exhibits lower thermal conductivity than the first layer (11), wherein at least the lateral wall (10, 50, 52) is heated conductively by an electric current flow, at least in sections thereof;
- wherein an electric potential difference is provided in the lateral wall (10, 50, 52) such that the direction of current flow in the lateral wall (10, 50, 52) is either from top to bottom or from bottom to top;
- homogenizing and/or conditioning the refined glass melt (1),
- shaping and/or cooling down and/or heat treating the homogenized and/or conditioned glass melt (1) such that a glass and/or a glass ceramic can be provided.

## Revendications

1. Dispositif destiné à l'affinage, notamment en continu, d'une masse en fusion inorganique non métallique, de préférence de verre en fusion, comprenant
- une cuve d'affinage (3), dotée d'une face supérieure (3c) et d'une face inférieure (3d), qui est formée au moins de parois latérales (10), lesquelles présentent, sur une face interne (10b), un garnissage (50, 52) métallique en tant que surface en contact avec la masse en fusion, les parois latérales présentant au moins une première couche (11), de préférence adjacente au garnissage (50, 52), et une deuxième couche (12), la première couche (11) ayant une stabilité en température plus élevée que la deuxième couche (12), et la deuxième couche (12) ayant une conductibilité thermique plus faible que la première couche (11), et le garnissage (50, 52) fournissant complètement la surface en contact avec la masse en fusion de la cuve d'affinage (3),
- au moins un dispositif de chauffage (71, 72) destiné au chauffage par conduction du garnissage (50, 52), au moyen d'un courant circulant dans le garnissage (50, 52), de sorte que la masse en fusion peut être chauffée à l'aide du garnissage (50, 52) chauffé, le dispositif de chauffage (71, 72) et le garnissage (50, 52) étant reliés entre eux par des lignes d'alimentation, sachant que
- les lignes d'alimentation sont en contact avec le garnissage (50, 52) par l'intermédiaire d'au moins une connexion supérieure (60, 61) et d'au moins une connexion inférieure (62, 63), de manière à permettre, au moins dans le garnissage (50, 52) de la paroi latérale (10), la génération d'un flux de courant, au moins dans certaines parties, qui passe de la face supérieure (3c) à la face inférieure (3d) ou de la face inférieure (3d) à la face supérieure (3c).

2. Dispositif selon la revendication précédente, **caractérisé en ce que** le garnissage (50) forme un rebord (51) qui couvre au moins en partie une face supérieure (10a) de la paroi latérale (10), et que notamment le rebord (51) peut être chauffé par conduction.

3. Dispositif selon l'une des revendications précédentes, **caractérisé en ce que** les lignes d'alimentation comprennent au moins un élément de connexion supérieur (67) et au moins un élément de connexion inférieur (65), destinés à établir le contact avec le garnissage (50, 51, 52, 53), sachant que
l'élément de connexion supérieur (67) est associé à la paroi latérale (10, 52) et/ou au rebord (51) du garnissage (50), et l'élément de connexion inférieur (65) est associé à la face inférieure (3d) et/ou à un fond (53) de la cuve d'affinage (3).

4. Dispositif selon l'une des revendications précédentes, **caractérisé en ce que** l'élément de connexion supérieur (67) est réalisé sous la forme d'une enveloppe qui s'étend au moins par portions sur le pourtour de la paroi latérale (10) et est de préférence appliquée contre une face extérieure (10c) de la paroi latérale (10).

5. Dispositif selon l'une des revendications précédentes, **caractérisé en ce que** l'élément de connexion inférieur (65) est réalisé sous la forme d'une plaque qui s'étend au moins par portions sur le pourtour de la face inférieure (3d) et/ou du fond (53) et est de préférence appliquée contre un bord extérieur de la face inférieure (3d) et/ou du fond (53), et/ou **en ce que** l'élément de connexion inférieur (65) s'étend vers l'extérieur, à travers la paroi latérale (10) et/ou sous la paroi latérale (10), et peut être connecté notamment à l'extérieur de la cuve d'affinage (3).

6. Dispositif selon l'une des revendications précédentes, **caractérisé en ce que** les lignes d'alimentation comprennent un moyen de raccordement supérieur (68) et un moyen de raccordement inférieur (66), destinés au raccordement électrique du garnissage (50, 51, 52, 53), de préférence au moyen de l'élément de connexion supérieur (67) et/ou inférieur (65), sachant que
le moyen de raccordement supérieur (68) s'étend au moins par portions sur le pourtour de la cuve d'affinage (3), de préférence autour de l'élément de connexion supérieur (67), et **en ce que** le moyen de raccordement inférieur (66) s'étend au moins par portions sur le pourtour de la cuve d'affinage (3), de préférence autour de l'élément de connexion inférieur (65).

7. Dispositif selon l'une des revendications précédentes, **caractérisé en ce que** les lignes d'alimentation possèdent une section transversale augmentée par rapport au garnissage (50, 51, 52, 53).

8. Dispositif selon l'une des revendications précédentes, **caractérisé en ce qu'**il comprend au moins un dispositif de refroidissement (81) qui est associé aux lignes d'alimentation, de sorte que les lignes d'alimentation peuvent être refroidies au moins par portions.

9. Dispositif selon l'une des revendications précédentes, **caractérisé en ce qu'**il comprend des moyens de chauffage par induction (73) du garnissage (50, 51), de sorte que la masse en fusion (1) peut être chauffée de préférence en plus par induction, au moins par portions.

10. Dispositif selon l'une des revendications précédentes, **caractérisé en ce que** les parois latérales (10) sont inclinées par rapport à la face inférieure (3d) et/ou au fond (53) de la cuve d'affinage (3).

11. Dispositif selon l'une des revendications précédentes, **caractérisé en ce que** les parois latérales (10) présentent une troisième couche (13) qui est disposée entre la première couche (11) et le garnissage (50, 51, 52, 53), et que la troisième couche (13) comprend de préférence un produit textile.

12. Dispositif selon l'une des revendications précédentes, **caractérisé en ce que** la première couche (11) présente une section transversale sensiblement en forme de L et s'étend avec une aile vers l'extérieur, sur la deuxième couche (12).

13. Dispositif selon l'une des revendications précédentes, **caractérisé en ce qu'**il comprend des amenées de gaz (90) qui s'étendent dans la paroi latérale (10), de sorte que sur un côté du garnissage (50, 51, 52, 53) qui est opposé à la masse en fusion (1), une atmosphère définie, de préférence d'un fluide non oxydant, peut être mise en place.

14. Procédé de fabrication, notamment en continu, d'un verre et/ou d'une vitrocéramique, comprenant
- la mise en fusion d'un mélange vitrifiable aux fins de préparer une masse de verre en fusion (1),
- l'affinage du verre en fusion (1) par élévation de la température du verre en fusion (1), au moins dans un volume qui est contigu au moins en partie à une paroi latérale (10, 50, 52), les parois latérales présentant au moins une première couche (11), de préférence adjacente au garnissage (50, 52), et une deuxième couche (12), la première couche (11) ayant une stabilité en température plus élevée que la deuxième couche (12), et la deuxième couche (12) ayant une conductibilité thermique plus faible que la première couche (11), au moins la paroi latérale (10, 50, 52) étant chauffée au moins par portions par conduction à l'aide d'un flux de courant électrique,
sachant que dans la paroi latérale (10, 50, 52), on crée une différence de potentiel électrique qui est telle que le sens du flux de courant dans la paroi latérale (10, 50, 52) soit dirigé de haut en bas ou de bas en haut,
- l'homogénéisation et/ou le conditionnement du verre en fusion (1) affiné,
- la mise en forme et/ou le refroidissement et/ou le traitement thermique du verre en fusion (1) homogénéisé et/ou conditionné, de façon à mettre à disposition un verre et/ou une vitrocéramique.
